Europäisches Patentamt

European Patent Office

Office européen des brevets

(19)

(11) **EP 1 260 252 A2**

(12) **EUROPEAN PATENT APPLICATION**

(43) Date of publication:
**27.11.2002 Bulletin 2002/48**

(51) Int Cl.⁷: **A63F 13/10**

(21) Application number: **02253524.9**

(22) Date of filing: **20.05.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **21.05.2001 JP 2001150694**

(71) Applicant: **Konami Corporation**
**Minato-ku, Tokyo (JP)**

(72) Inventor: **Suzuki, Gen,**
**Konami Computer Entertainment Studios**
**Tokyo (JP)**

(74) Representative: **Kenyon, Sarah Elizabeth et al**
**Miller Sturt Kenyon**
**9 John Street**
**London WC1N 2ES (GB)**

(54) **Game program, game apparatus, and method for carrying out a game**

(57)     A computer implements a status data computing function P1 for acquiring information about a game entity's action and, on the basis of the acquired information, computing status data that represents game status in response to the action, a game status output function P2 for preparing and outputting game status based on the status data, a motivation parameter computing function P3 for computing a motivation parameter that represents the entity's mental state on the basis of the game status, and a motivation reflecting function P4 for causing the computed status data to reflect the motivation parameter. Because the output game status reflects the entity's mental state, it is possible to enjoy the psychological developments in the game, with the entity's mental state reflected in the game.

Fig. 2

**Description**

The present invention relates to a game program, which prepares and outputs game status in response to an entity's action. The invention also relates to a game apparatus and a method for carrying out a game.

A program for a game in which some players compete for records is known. As an example, a golf game is programmed for some players to compete while playing the holes of a golf course on a screen. The game user controls one of the players. Environmental conditions of the course, such as the wind and the geographical features, can be reflected in the carries, the directions in which the hit balls go, and so on.

However, because the mental states of the players, who are the game entities, are not considered, each player's plays do not reflect his or her and the other players' nice and bad shots. Consequently, the game is not sufficiently interesting. In a real golf game, the players' mental states greatly influence their plays, and therefore they use psychological tactics.

An object of the present invention is to provide a game program that enables a game to reflect an entity's mental state so that the psychological developments in the game can be enjoyed.

Another object of the invention is to provide a game apparatus that enables a game to reflect an entity's mental state so that the psychological developments in the game can be enjoyed.

Still another object of the invention is to provide a method for carrying out a game that reflects an entity's mental state so that the psychological developments in the game can be enjoyed.

In accordance with an aspect of the present invention, there is provided a game program for preparing and outputting game status in response to an entity's action is recorded. The program causes a computer to implement:

a status data computing function for acquiring information about the entity's action and, on the basis of the acquired information, computing status data representing the game status;
a game status output function for preparing and outputting game status based on the status data;
a motivation parameter computing function for computing a motivation parameter representing the entity's mental state on the basis of the game status; and
a motivation reflecting function for causing the computed status data to reflect the motivation parameter.

The status data computing function acquires information about the entity's action and computes status data based on the acquired information. The game status output function prepares and outputs game status based on the computed status data, which represents the game status in response to the entity's action.

The motivation parameter computing function computes a motivation parameter representing the entity's mental state on the basis of the prepared game status. The motivation reflecting function causes the computed status data to reflect the computed motivation parameter. Then, the game status output function prepares and outputs game status based on the status data reflecting the motivation parameter.

Because the output game status reflects the entity's mental state, it is possible to enjoy the psychological developments in the game with the mental state reflected in the game.

The output game status includes status resulting from the entity's action and status not resulting from it. The status data representing the game status may be one datum or more data. If there are two or more status data, the motivation parameter may be reflected at different rates between them. This makes the game status delicately reflect the entity's mental state.

In accordance with another aspect of the present invention, there is provided a game program for preparing and outputting game statuses in response to the actions of at least two entities is recorded. Each of the statuses is associated with one of the entities. The program causes a computer to implement:

a status data computing function for acquiring information about the entities' actions and, on the basis of the acquired information, computing status data each representing one of the game statuses;
a game status output function for preparing and outputting game statuses based on the status data;
a motivation parameter computing function for computing motivation parameters each representing the mental state of one of the entities on the basis of the respective game statuses; and
a motivation reflecting function for causing the computed status data to each reflect the associated motivation parameter.

The motivation parameter computing function computes the motivation parameters each for one of the entities. Each of the computed motivation parameters is reflected in the status data computed for one of the entities. Consequently, each entity's game status can reflect his or her mental state. This makes the game more enjoyable or interesting. This program is suitable for a game in which two or more entities compete, for example.

The motivation parameter computing function may involve computing the motivation parameter for each entity on the basis of the status data on the other entity.

In this case, the motivation parameter for each entity is computed on the basis of the status data on the other entity. Consequently, each entity's mental state varies with the other entity's game status. This makes it possible to enjoy the entities' tactics.

In order for each entity's mental state to vary with the other entity's game status, the status data may be values associated with the respective entities' records. In this case, the motivation parameter computing function involves computing the motivation parameter for each entity with this parameter varied with the difference between the status data on the entities.

Specifically, the motivation parameter representing each entity's mental state varies with the difference between the entities' records. Consequently, each entity's mental state reflects all of the entities' records.

In order to vary the motivation parameters, as stated above, the motivation parameter computing function may involve computing the motivation parameter for each entity by enlarging this parameter with the remainder of the status datum about him or her from which the status datum on the other entity is subtracted. In the meantime, the motivation reflecting function may involve increasing the computed status data in value with the motivation parameter. In this case, the motivation parameter representing each entity's mental state increases with his or her record relative to the other entity's record. The status datum associated with each entity's record increases in value with the associated motivation parameter. This is suitable for a game in which larger values represent better records.

For a golf game or another game in which lower scores represent better records, the motivation parameter for each entity may increase as the remainder in value of the status datum about him or her from which the status datum on the other entity is subtracted decreases. In the meantime, as the motivation parameter increases, the computed status datum about him or her may decrease in value.

The status data may be classified into a first type and a second type. The first type of status data larger in value and the second type of status data smaller in value represent better records. The first type of status datum on each entity may be increased in value as the associated motivation parameter increases. The second type of status datum on each entity may be decreased in value as the associated motivation parameter increases.

This makes each entity's mental state reflect his or her and the other entity's records. Consequently, the game is more enjoyable.

In order to assign the entities different characters, the motivation parameter computing function may involve computing the motivation parameter for each entity on the basis of character data about him or her acquired from a character data storage area in which character data on the entities' characters are stored.

In this case, the motivation parameter computing function involves acquiring the character datum on each entity from the character data storage area and computing the associated motivation parameter. This makes the entities' mental states vary with their characters. Consequently, the game can be more enjoyable.

In order to use the character data, the motivation parameter computing function may include a character selection entry function for receiving the selective entry of the entities' characters. This computing function may involve computing the motivation parameter for each entity by acquiring from the character data storage area the character datum about the associated character entered selectively in the area.

In this case, the motivation parameter computing function involves computing the motivation parameter for each entity by acquiring from the character data storage area the character datum about the associated character entered selectively in the area by the character selection entry function. This makes it possible to enjoy the game by selecting the entities' characters.

Alternatively, in order to assign the entities different characters, the motivation parameter computing function may include a mental value setting function for receiving the setting entry of mental values each based on one of the entities' characters. This computing function may involve computing the motivation parameter for each entity on the basis of the associated mental value set and entered.

In this case, the motivation parameter computing function involves computing the motivation parameter for each entity on the basis of the mental value based on his or her character set and entered by means of the character selection entry function. This makes it possible to enjoy the game by setting the entities' characters.

The motivation parameters, which are parameters for representing their mental states, may each consist of two or more parameters. As an example, the motivation parameter for each entity may include an internal parameter and an external parameter. The motivation parameter computing function may involve computing the motivation parameter for each entity by computing the associated internal parameter based on the status data on him or her and the associated external parameter based on the status data on the other entity.

In this case, the internal parameter for each entity is computed on the basis of the status data about him or her, while the external parameter for each entity is computed on the basis of the status data about the other entity. Accordingly, each entity's mental state varies with both entities' game statuses. This makes the game more enjoyable.

With the type of the status data on each entity, the motivation reflecting function may vary the ratio between the associated internal and external parameters reflected in the status data.

In this case, the ratio between the internal and external parameters reflected in the status data about each entity varies with the data type. This makes the game status complexly vary and the game more enjoyable.

The game status output function, which is a function for preparing and outputting game status based on the status data, may include a motivation display function for displaying the motivation parameters.

Because the motivation display function displays the motivation parameters, it is possible to enjoy the game while watching the display of the entities' mental states.

The game status output function may also include a function for audibly outputting the motivation parameters.

Because this function audibly outputs the motivation parameters, which represent the entities' mental state, it is possible to make the game more enjoyable.

The motivation display function may display the motivation parameter for each entity by averaging the associated internal and external parameters.

In this case, because the average of the internal and external parameters is displayed as the motivation parameter, it is easier to grasp the entity's mental state.

Alternatively, the motivation parameters may be computed as weighted depending on the game statuses etc. The internal and external parameters for each entity may be displayed separately if the game program is applied to a game for which it is preferable that the internal and external factors in the entities' mental states be displayed separately.

This makes it easier to grasp the entities' mental states, and consequently makes the game more enjoyable.

The motivation display function may display the motivation parameters in color phases.

With the motivation parameters displayed in color phases, it is possible to know the entities' mental states at a glance. This makes the game more enjoyable.

The motivation display function may display the motivation parameters in electrocardiographic waves.

With the motivation parameters displayed in electrocardiographic waves, it is possible to grasp the entities' mental states as images.

The motivation display function may display the motivation parameters in the form of the looks in the entities' faces.

With the motivation parameters displayed in the form of the looks in the entities' faces, it is possible to know the entities' mental states at a glance.

The motivation parameters may be displayed as numerical values so that the entities' mental states can be delicately displayed.

The present invention can be applied to various games. As an example, the entities may be golf players. The status data computing function may compute the status data representing a golf game status in response to each player's play.

Because each golf player's game status reflects his or her mental state, it is possible to enjoy the psychological developments in the game, which reflects the players' mental states. The status data computing function may compute the status data about each player by acquiring information about his or her swing. The game status output function may prepare and output golf game status based on the computed status data.

The status data on each player may be any or a combination of his or her score, ranking and carry, the distance between his or her ball and a target, and the type of the place where the ball is positioned.

This makes it possible to enjoy the psychological developments in the golf game, which reflects the players' mental states.

The game program may also be applied to fishing, bowling and other games. In these cases, the entities are fishermen, bowlers, etc.

In many cases, the data of the game program according to the invention are recorded on record media, which are then distributed. The recorded data can be read suitably from the media into computers. The record media may be magnetic recording media, magneto-optical recording media or any other record media that may be developed in future. The game program may consist of software and hardware parts. Part of the program may be recorded on record media and read in suitably as the need arises. The program may be reproduced as primary and secondary copies.

The game program may be implemented by a computer. The present invention may be applied as a substantial system including such a computer. In other words, the invention may be effective as this system as well. The foregoing modifications may be adapted for the system. Such a system may be used alone or as incorporated in an apparatus for use with another system, and may include various forms.

As a matter of course, the present invention resides basically in the procedures predetermined for the foregoing functions. Accordingly, the invention can also be applied as a method.

Fig. 1 is a schematic diagram of a game apparatus that implements a game program according to a first embodiment of the present invention.

Fig. 2 is a schematic diagram of a game program that implements various functions of the invention.

Fig. 3 is a table of structures of status data.

Fig. 4 is a table of structures of character data for internal parameters.

Fig. 5 is a table of structures of character data for external parameters.

Fig. 6 is a table of structures of climate-dependent data in a modified embodiment of the invention.

Fig. 7 is a mental value table.

Fig. 8 is a character table.

Fig. 9 is a motivation ratio table.

Fig. 10 is a flowchart of the whole process according to the game program.

Fig. 11 is a flowchart of the information entry process by means of the motivation parameter computing function of the invention.

Fig. 12 is a display of a character selection screen.

Fig. 13 is a display of a mental value setting screen.

Fig. 14 is a display of an initial game status screen.

Fig. 15 is a flowchart of the process for acquiring information about players' actions by means of the status data computing function of the invention.

Fig. 16 is a flowchart of the process for computing status data by means of the status data computing and motivation reflecting functions of the invention.

Figs. 17 and 18 are a flowchart of the process for computing motivation parameters by means of the motivation parameter computing function of the invention.

Fig. 19 is a chart of the process for computing internal and external parameter variation values.

Fig. 20 is a chart of the process for computing a general parameter.

Fig. 21 is a flowchart of the process for outputting game status by means of the game status output function of the invention.

Fig. 22 is a color conversion table.

Fig. 23 is a display of a game status screen.

Fig. 24 is a table of structures of differential status data in a second embodiment of the invention.

Fig. 25 is a table of structures of character data for external parameters in the second embodiment.

Fig. 26 is a flowchart of the process for computing a motivation parameter according to the second embodiment.

Fig. 27 is a display of scores in a third embodiment of the invention.

Fig. 28 is a flowchart of the process for outputting game status in the third embodiment.

Embodiments of the present invention are described below in the following order.

    1. Schematic Hardware Structure of Game apparatus
    2. Schematic Structure of Game Program
    3. Data Structures
    4. Operation of Game Program
    5. Second Embodiment
    6. Third Embodiment

1. Schematic Hardware Structure of Game apparatus

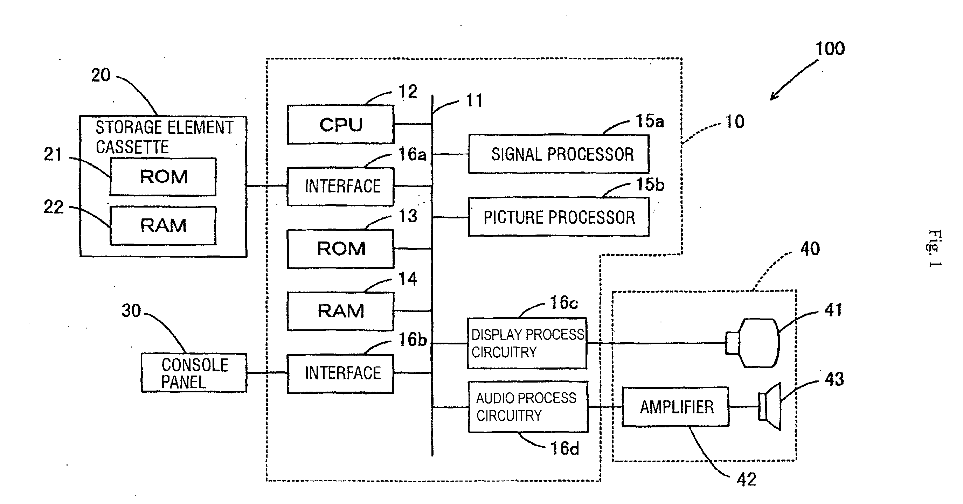

Fig. 1 is a schematic diagram of a golf game apparatus 100 that implements a game program according to a first embodiment of the present invention. The game apparatus 100 is a golf simulator, on which entities in the form of virtual players play golf. One or more users can enjoy a simulation golf game by entering instructions for one or more of the golf players into the game apparatus 100. A program, which will be described later on, makes it possible to control one or more of the golf players automatically without entering the users' instructions. The golf players compete with each other for records in the golf game. Actions and/or motions of each golf player reflect the scores, the shots, etc. of not only his or her own but also the other players, who are the competitors. This enables the users to enjoy the psychological developments in the simulation game as if they were playing a real golf game.

The present invention may also be applied to a fishing game apparatus, on which virtual fishermen compete for the kinds and/or number of caught fish, a vaulting game apparatus, on which virtual vaulters compete for the height of a box that they can vault, or a baseball game apparatus, on which virtual players compete for personal title scores. The invention may further be applied to a karate, swordsmanship or dancing game apparatus, or another game apparatus for form or shape evaluation, on which no virtual players compete for records.

With reference to Fig. 1, the game apparatus 100 consists essentially of a main machine 10, a storage element cassette 20, a console panel 30 and a television 40.

The main machine 10 includes a bus 11, which includes an address bus, a data bus and a controller bus. The bus 11 is connected to a CPU 12, a ROM 13, a RAM 14, a signal processor 15a, a picture processor 15b, interfaces 16a and 16b, a display process circuitry 16c, and an audio process circuitry 16d. The storage element cassette 20 and the console panel 30 are connected to the interfaces 16a and 16b respectively. The television 40 includes a Braun tube 41 and an amplifier 42, which are connected to the display process circuitry 16c and the audio process circuitry 16d respectively by cables. The television 40 also includes a speaker 43, which is connected to the amplifier 42. The CPU 12 controls the whole of the game apparatus 100 in a centralized fashion according to the programs stored in the ROM 13 and the storage element cassette 20.

The game apparatus 100 is designed as a domestic game apparatus. The system 100 might be designed as a game apparatus to which a personal computer or a workstation fitted with a keyboard and a mouse is applied. The storage element cassette 20 of this system might be replaced with a hard disc. The console panel 30 of this system might be replaced with a keyboard and a mouse. The television 40 of this system might be replaced with a display for exclusive use with a personal computer. Alternatively, the system 100 might be designed as a game apparatus for business use, into which all of the components of Fig. 1 are integrated.

The ROM 13 of the main machine 10 is a read only memory in which an operating system (OS) is stored. When the main machine 10 is turned on, the CPU 12 executes the OS stored in the ROM 13, and reads the game program from the storage element cassette 20 via the interface 16a into the RAM 14.

The storage element cassette 20 is a record medium including a ROM 21 and a RAM 22, which are housed in a plastic case. The ROM 21 is a read only memory in which the game program for implementing various functions and various data are stored. The RAM 22 is a random access memory that is backed up by a battery (not shown), and in which various data can be stored. The CPU 12 also reads data suitably from the ROM 21 and RAM 22 via the interface 16a, and writes data suitably via the interface 16a in the RAM 22.

The storage element cassette 20 might be replaced by a hard disc, a flexible disc, a CD-ROM or another record medium, from which the OS, the game program and various data can be read into the RAM 14 by a drive for the record medium. If a CD-ROM were used, no data could be written in it, but data could be written in the RAM 14 of the main machine 10 instead. A nonvolatile memory might also be used. Alternatively, a modem might be connected to a communication line so that an external file server could be accessed for downloading. The communication line would be a transmission medium for the present invention. Of course, a record medium might be incorporated directly in the circuit board of the main machine 10.

The console panel 20 is fitted with letter keys (not shown) for letter entry, cursor keys and a stick (not shown) for cursor movement, a determination key for entry determination, and so on. The letter, cursor and determination keys are push buttons. When these keys are pushed, signals corresponding to them are generated and output to the interface 16b. The stick is supported by an elastic member so as to incline freely over 360 degrees, and functions like a joystick. When the stick inclines, a signal corresponding to the direction of inclination is generated and output to the interface 16b. The CPU 12 can execute various types of processing with the signals output from the console panel 30.

The console panel 30 might be replaced by a keyboard and a mouse. If the game apparatus 100 were designed as a game apparatus for business use, numeric buttons, letter buttons and other buttons might be displayed so that the users' fingers could touch them for entry.

The television 40 for display and audio output may be a general television, which includes an external input terminal, a Braun tube, an amplifier and a speaker. Of course, a video player (tape deck) or a DVD player (reproducer) may be incorporated into the television 40. The television 40 might also be replaced by a display without an amplifier and a speaker.

The signal processor 15a in the main machine 10 generates and processes three-dimensional data on the motions of the golf players, which will be output to the Braun tube 41, display data for displaying motivation parameters, which will be explained later on, and other data. The signal processor 15a also generates audio data based on the audio data on the ADPCM (adaptive differential pulse code modulation) system that is read from the storage element cassette 20 into the RAM 14. The audio data output from the signal processor 15a is then supplied to the audio process circuitry 16d, which converts it into an analog sound signal. The sound signal is then supplied to the amplifier 42, which amplifies it. The amplified signal is then supplied to the speaker 43.

The picture processor 15b causes the display data generated by the signal processor 15a to be written in a predetermined display area in the RAM 14. The written display data is then supplied to the display process circuitry 16c, which converts it into an ordinary NTSC signal. The NTSC signal is then supplied to the Braun tube 41.

2. Schematic Structure of Game Program

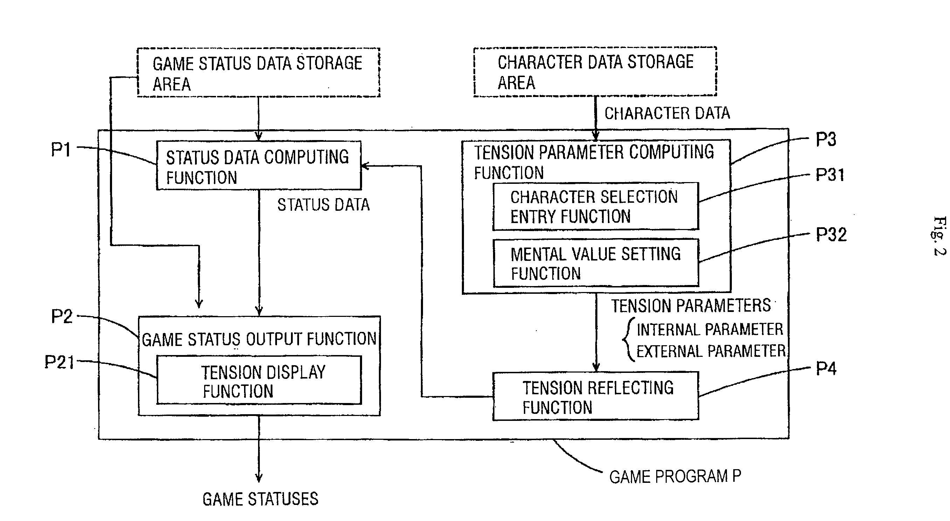

Fig. 2 is a schematic diagram of the game program P that implements various functions of the present invention.

The game program P has a status data computing function P1, a game status output function P2, a motivation parameter computing function P3 and a motivation reflecting function P4. The status data computing function P1 acquires information about the actions of the golf players. On the basis of the acquired information, this function P1 computes status data associated with the respective actions. When computing the status data, the function P1 refers to the data in the game status data storage area of the ROM 21 of the storage element cassette 20. The game status output function P2 prepares golf game statuses based on the computed status data. On the basis of the prepared game statuses, this function P2 outputs a picture, objects, a sound signal, etc. through the Braun tube 41 and the speaker 43 of the television 40. The status data and the game statuses are associated with the respective players.

The motivation parameter computing function P3 computes the motivation parameters provided for the respective golf players on the basis of the prepared game statuses. The motivation parameters for each player represent his or her mental state, and include an internal parameter and an external parameter. The internal parameter for each player is based on the status data about him or her. The external parameter for each player is based on the status data about the other players. The motivation parameter computing function P3 includes a character selection entry function P31 and a mental value setting function P32. The motivation parameter computing function P3 acquires character data from the character data storage area of the ROM 21. This function P3 acquire, by means of setting entry, mental values corresponding to the players' characters. The motivation reflecting function P4 causes the status data about each player that is computed by the status data computing function P1 to reflect the associated motivation parameters. Then, the game status output function P2 prepares and outputs a game status based on the status data reflecting the motivation parameters for each player. The game status output function P2 includes a motivation display function P21, which displays the motivation parameters on the television 40.

Consequently, the golf game statuses output through the television 40 reflect not only the wind, the topography and other environmental conditions but also the players' motivations, which are mental states. This enables the system users to enjoy the golf players' psychological developments.

3. Data Structures

Various data necessary for the progress of a golf game on the basis of the players' actions are stored in the game status data storage area of the ROM 21. The stored data include data about the geographical features of the golf course, data for the calculation of ball loci, data for the display of the players' characters and scores, and sound data output for nice and bad shots. Some of the stored data are acquired when the players make actions. The acquired data are used for the computation of the status data. Some of the stored data are acquired in response to the computed status data so that the statuses of the golf game in progress can be prepared and output.

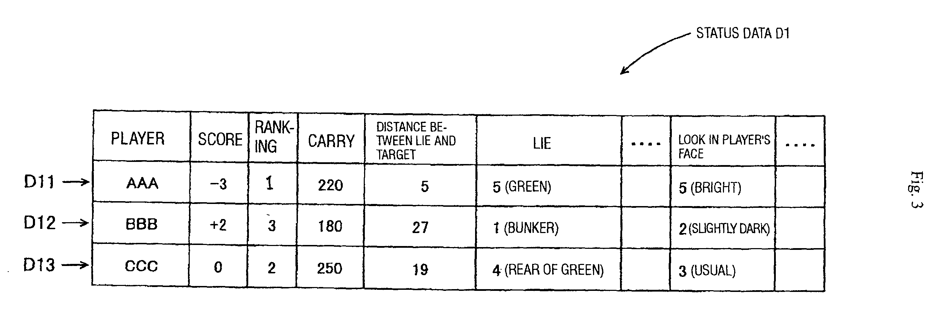

Fig. 3 shows status data D1 generated as the golf game progresses. The status data D1 are values associated with the players' records. The status data D1 about each player include his or her score, ranking and carry (yards), the distance (yards) between his or her ball lie and a target point, the type of the place where his or her ball lies, and the look in his or her face. The place types are represented by the values assigned to a bunker, a green, etc. The looks in the faces change with the motivation parameters, and are represented by the five values assigned to looks, which range from a bright look to a dark look. The status data D1 are stored in the RAM 14.

The internal parameter for each player varies with his or her score, piece of play, etc. The internal parameter rises if, for example, the player has a good shot or a good score, or makes a good recovery from the pinch in a bunker or near a pond. The internal parameter drops if, for example, the player has a bad shot or a bad score. The external parameter for each player varies with the other players' scores, pieces of play, etc. The external parameter drops if, for example, a competitor has a good shot or makes a good recovery from the pinch in a bunker or near a pond. The external parameter rises if, for example, a competitor has a bad score. Each player's score is to be influenced more strongly by the accompanying players' scores than the scores of the players not accompanying him or her.

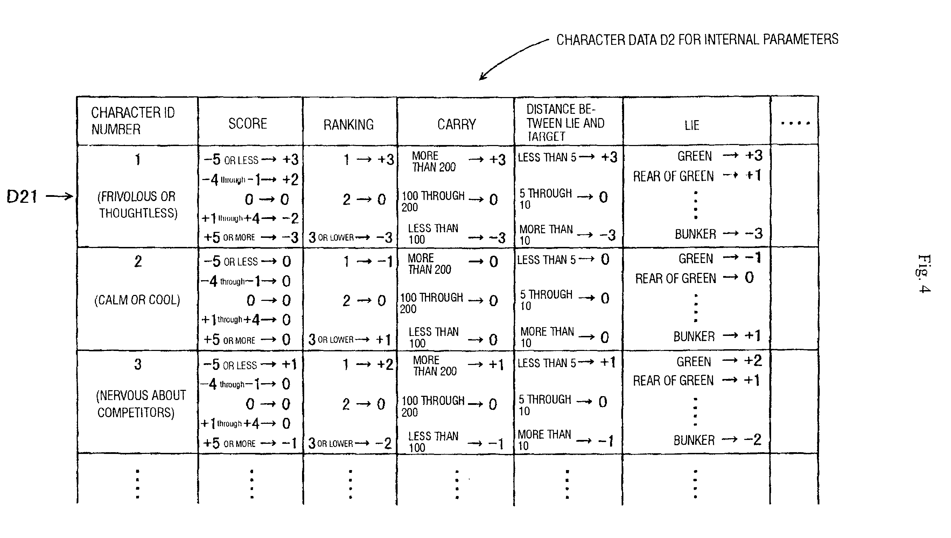

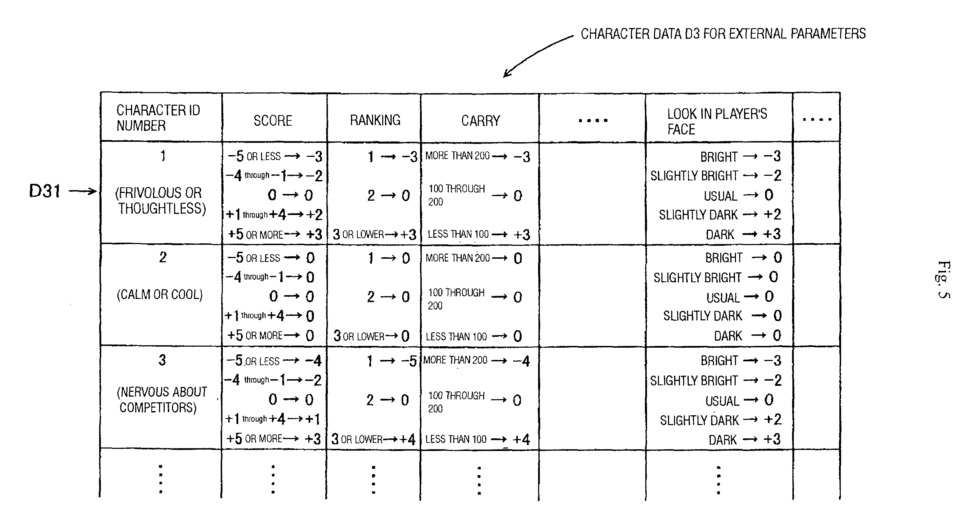

The internal and external parameters are integers ranging from 0 to 99. Figs. 4 and 5 show character data for the computation of the parameters. The character data are stored in the character data storage area of the ROM 21. The character data are values for giving characters to the players, and may represent the following characters:

> burning with other players' super shots;
> strong on short holes and therefore tenser there;
> weak on long holes and therefore less tense there; and
> strong at the last moment and therefore tenser at the last three holes.

The character data consist of character data D2 and D3 for the computation of the internal and external parameters respectively. The character data are classified under serial character identification numbers and the items of the status data D1. As an example, the character ID number 1 represents a frivolous or thoughtless player. The character datum D2 about this player in terms of scores is +3, +2, or -3, for example, if his or her score is -5 or less (good score), -4 through-1, or +5 or more (bad score), respectively. Contrariwise, the character datum D3 about this player is -3, for example, if another player's score is -5 or less. As another example, the character ID number 2 represents a calm or cool player. The character datum D2 about this player in terms of scores is 0 regardless of his or her score. Thus, the stored character data differ between the character ID numbers, and can be used for the computation of the motivation parameters to give various characters to the players.

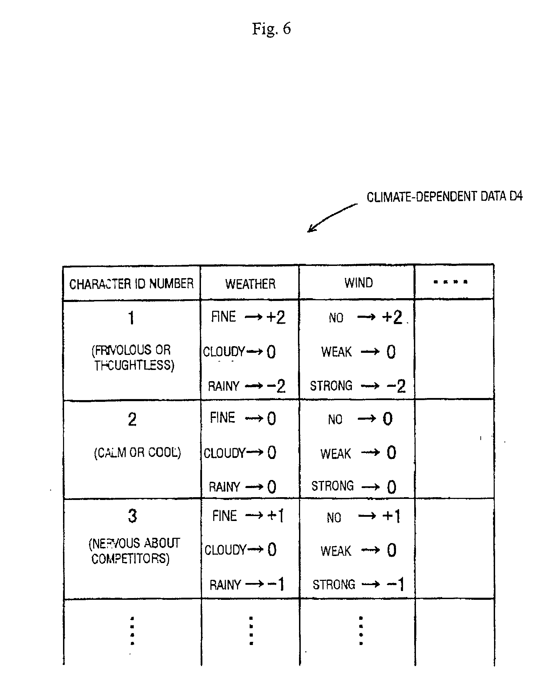

In a modified embodiment of the present invention, a motivation parameter varies with the climate. This embodiment requires climate-dependent data D4 as shown in Fig. 6, which are classified under the character ID numbers in terms of the weather, the wind, etc. As an example, the climate-dependent data D4 for the character ID number 1 in terms of the weather is +2, 0 or -2 if the weather is fine, cloudy or rainy respectively. In this case, the motivation parameter rises in fine weather and drops in rainy weather. It is thus possible to use the climate-dependent data D4 for the computation of the motivation parameter, enabling each player's motivation to reflect the weather. The climate-dependent data D4 might be used for the computation of the foregoing external parameter.

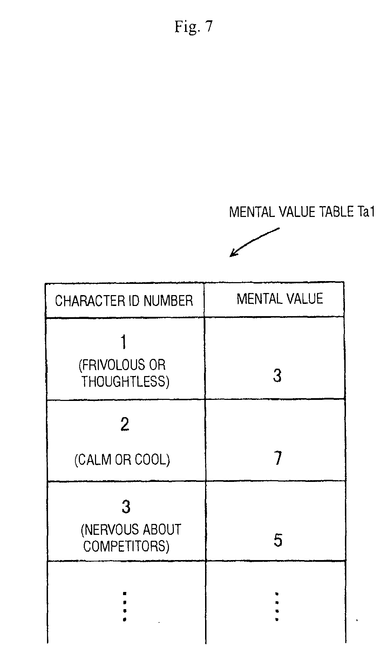

Fig. 7 is a mental value table Ta1 showing mental values, each of which is associated with one of the character ID numbers. This table Ta1 is stored in the character data storage area. The mental values are ability values, each of which is associated with a player's character. The mental values are integers ranging from 1 to 10. A player whose mental value is small is moody or temperamental. If this player has a bad shot, for example, he or she is liable to be less tense, and is slow to recover motivation. A player whose mental value is great is calm or cool. Even if this player has a bad shot, he or she is not liable to be less tense, and is quick to recover motivation. In other words, a greater mental value represents higher ability of a player. If a user of the game apparatus 100 increases the mental value of a player handled by him or her, the game is easy for him or her, and it is easy for him or her to make a good score. If a user of this system increases the mental value of a player controlled automatically by the system, the game is difficult for the user, and it is difficult for him or her to make a good score.

The mental values can also be set on the console panel 30.

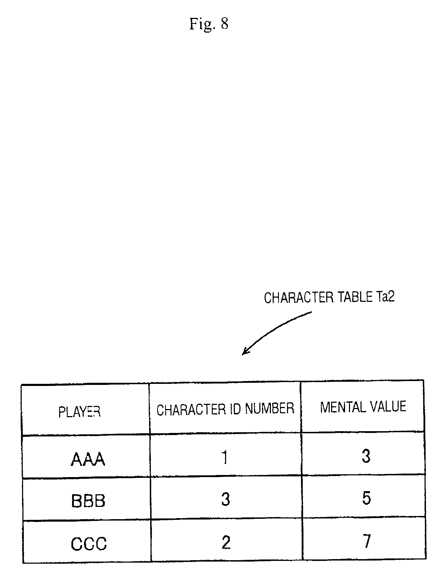

Fig. 8 is a character table Ta2, which is prepared in the RAM 14, for assigning each of the virtual players AAA, BBB and CCC one of the character data etc. In the character table Ta2, each player is associated with one of the character ID numbers, each of which is associated with one of the mental values. The players AAA, BBB, and CCC are frivolous or thoughtless, nervous about the competitors, and calm or cool, respectively. The players' characters can be selected on the console panel 30.

The motivation parameters for each player include, not only an internal parameter and an external parameter, but also a general parameter, which is computed from the internal and external parameters. The general parameter represents the player's mental state, and is an integer ranging from 0 to 99. As stated already, the motivation parameters are computed differently with the respective character data for the different players, and differently with the respective types of status data D1.

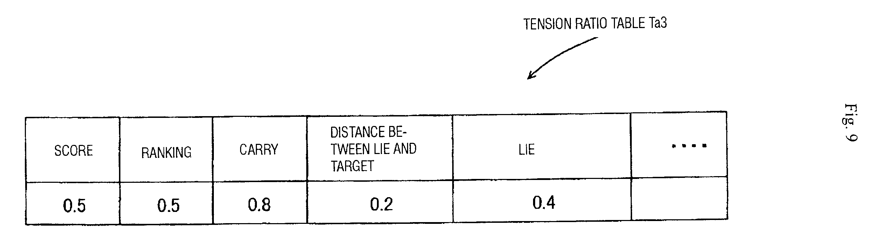

The internal and external parameters can be reflected at predetermined rates in the computation of the status data. Fig. 9 is a motivation ratio table Ta3, which is stored in the ROM 21, showing the rates of reflection of the internal parameter. Each of these rates is associated with one item of the status data D1. Each of the rates of reflection of the external parameter is the remainder of 1 from which the associated rate in the table Ta3 is subtracted. As an example, the rate of reflection of the internal parameter in the score is 0.5. Consequently, the rate of reflection of the external parameter in the score is 1 - 0.5 = 0.5. As another example, the rate of reflection of the internal parameter in the carry is 0.8. Consequently, the rate of reflection of the external parameter in the carry is 1 - 0.8 = 0.2. These rates of reflection in the carry are based on the fact that a golf game is more enjoyable if each player's mental state reflects his or her carry more than the other players' distances of carry. The rate of reflection of the internal parameter in the distance between each current ball position and a target is 0.2. This low rate is based on the fact that a golf game is more enjoyable if each player's mental state reflects the other players' distances more than his or her distance.

4. Operation of Game Program

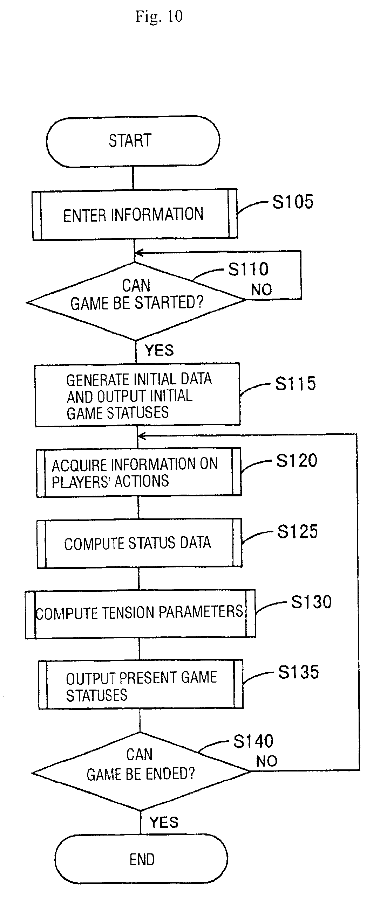

Fig. 10 is a flowchart of the whole of a process according to the game program P, which implements the foregoing functions. After the game apparatus 100 is turned on, a system user enters information into it (step S105). The program then judges whether to start a golf game (step S110). If the conditions for the step S110 are not met, the step S110 is repeated. If the conditions are met, the process moves to the step S115. At the step S115, various initial data are generated, and initial game statuses are prepared and output.

After the step S115, the program P acquires information on the players' swinging actions (step S120). On the basis of the acquired information, the program computes status data on the respective players by using the motivation parameters for the respective players (step S125). On the basis of the computed status data, the program computes motivation parameters (step S130), and prepares and outputs present game statuses (step S135).

Then, the program P judges whether to end the game (step S140). If one of the players is playing, the conditions are not met, and the steps S120 - S140 are repeated. If the play finishes, the conditions are met, and the process ends.

The steps of this process are described below in detail occasionally with reference to display screens on the television 40 etc.

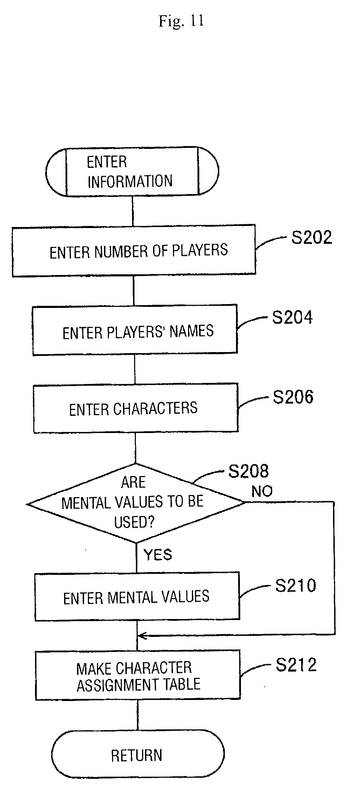

Fig. 11 is a flowchart of the process of information entry at the step S105, which can be implemented by part of the motivation parameter computing function P3. First, a game entry setting screen (not shown) is displayed on the television 40. This enables the system user to set the number of players by pressing some keys on the console panel 30. Thus, the number of players is acquired (step S202). In this embodiment, the number of players is set at three.

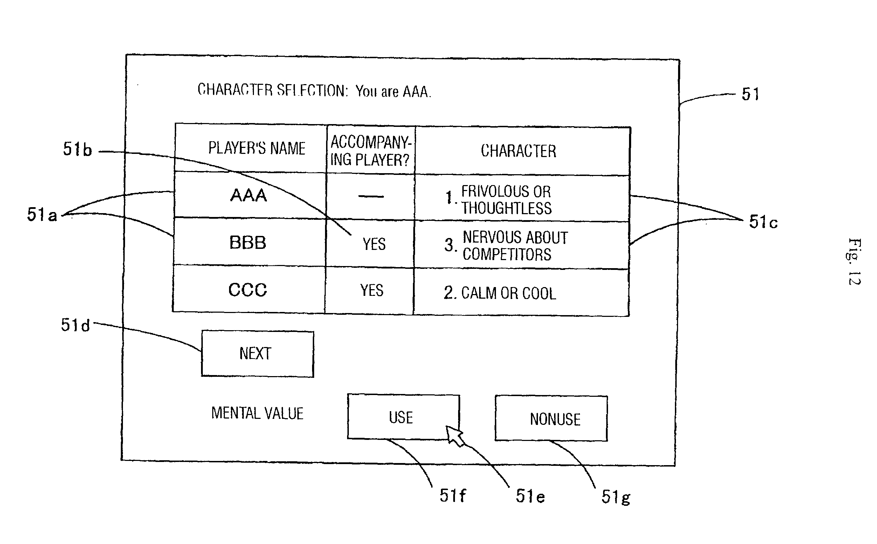

After the number of players is set, a character selection screen 51, as shown in Fig. 12, is displayed on the television 40. This enables the system user to enter the players' names in the player name entry column 51a of the selection screen 51 through the console panel 30. Thus, the players' names is acquired (step S204). The system user can control the player whose name stands at the top of the entry column 51a. An accompanying player selection column 51b enables the system user to select any or none of the other two players to accompany the player controlled by the user. In this embodiment, all of the three players accompany each other. Second character data (not shown) for the external parameter are stored in the ROM 21 and differ from the character data D3. Computations can be done with reference to the second character data to vary the external parameter for the manually controlled player on the basis of the record of any player who does not accompany him or her.

Subsequently, the character selection entry function P31 enables the system user to select for each player a character in the character selection column 51c on the character selection screen 51 through the console panel 30. Thus, the players' characters are acquired (step S206). In the character selection column 51c, letter data from a character letter data table (not shown) are displayed. In this table, each of the character ID numbers is assigned to a letter datum such as "FRIVOLOUS OR THOUGHTLESS". The displayed letter data can be changed over with the cursor keys on the console panel 30.

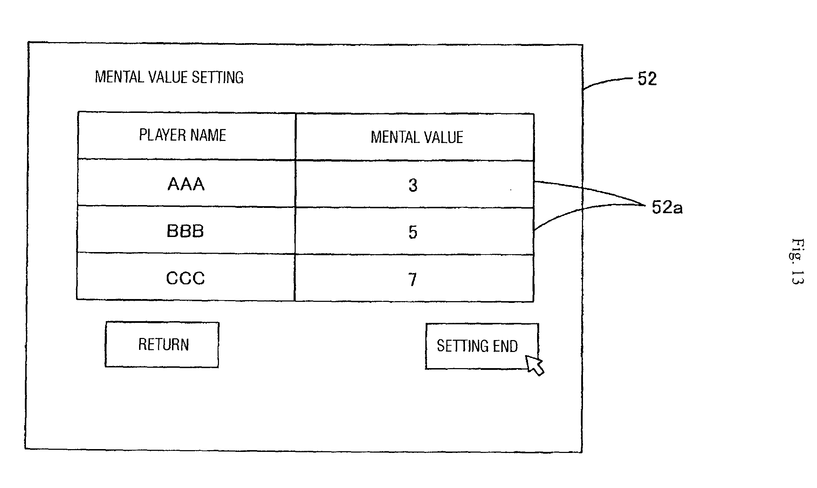

A "NEXT" button 51d is provided under the player name column 51a. It is possible to set many players' names etc. by pressing the determination key with the pointer 51e positioned on the "NEXT" button 51d. A "USE" button 51f and a "NONUSE" button 51g are provided below the "NEXT" button 51d. The selection of the button 51f or 51g determines whether or not to use the mental values for the computation of the motivation parameters (step S208). If the determination key is pressed with the pointer 51e positioned on the "USE" button 51f by means of the stick on the console panel 30, the mental value setting function P32 displays a mental value setting screen 52 as shown in Fig. 13. This setting screen 52 includes a mental value entry column 52a, where mental values are displayed by reference to the mental value table Ta1 (Fig. 7) in the ROM 21. The displayed mental values can be changed at the console panel 30. Mental values can be set in the entry column 52a through the console panel 30. Thus, the mental values are acquired (step S210). A "SETTING END" button 52b is provided under the entry column 52a. If this button 52b is selected, the process moves to the step S212.

If the "NONUSE" button 51g is selected at the step S208, the process of information entry skips the step S210 and moves to the step S212.

At the step S212, a character table Ta2 as shown in Fig. 8 is made in the RAM 14 on the basis of the acquired player names, characters and mental values. Then, the process of information entry ends. This causes the step S110 of Fig. 10 to be executed, displaying a game start screen (not shown), which includes a game start button. If this start button is selected, the process of Fig. 10 moves to the step S115, where the game starts.

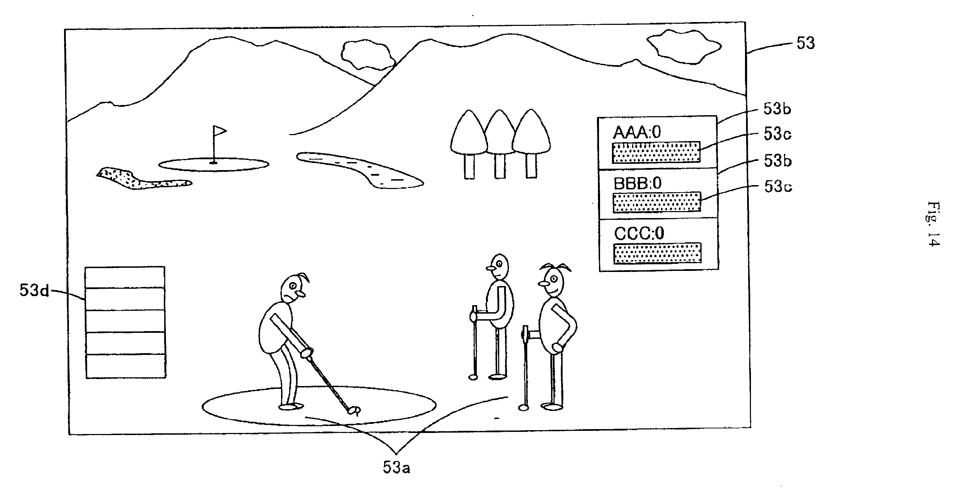

The initial data generated at the step S115 include the initial scores (0) and other status data on the respective players, and the initial data of the internal, external and general parameters. In this embodiment, the internal, external and general parameters are variables TI, TO and T respectively, each of which is 70. The game apparatus 100 prepares initial game statuses based on the players' initial status data and the motivation parameters for the players, and displays a game status screen 53 as shown in Fig. 14. Various game statuses are displayed on this screen 53, and include players 53a, the number of whom is set at the step S202, score indicators 53b, and mental lamps 53c indicating the motivation parameters for them. The displayed status data also include the geographical features of and the weather at the golf course. The mental lamps 53c indicate the motivation parameters in color phases. The color phases of the lamps 53c are lighter green for larger general parameters and darker blue for smaller general parameters. If one of the players eagles a hole or gets a miraculous or super shot, his or her lamp 53c temporarily becomes red, imaging his or her excitement.

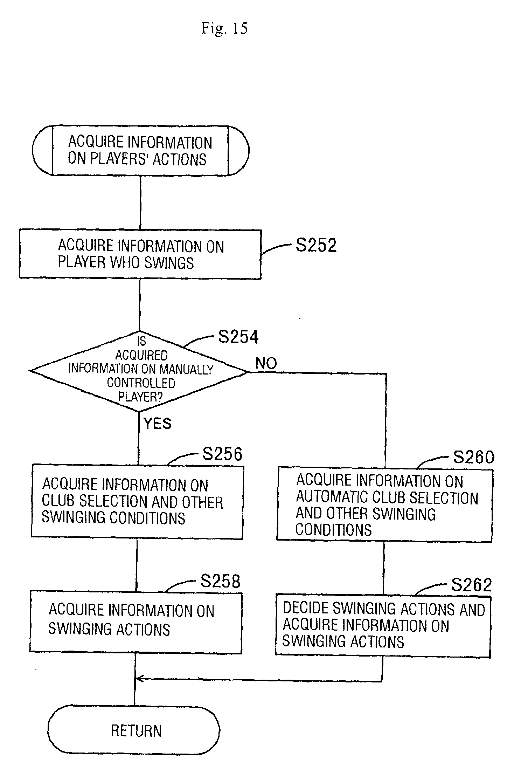

With the game status screen 53 (Fig. 14) displayed, information on the players' actions is acquired at the step S120. Fig. 15 is a flowchart of the process for acquiring information on the players' actions. First, information on the player who swings a golf club is acquired (step S252). The RAM 14 is provided with a counter p (not shown) in it for controlling the swinging order. Every time the step S252 is executed, the counter p increments by 1. When the count of the counter p exceeds the number of players, the counter is reset to 1. The counts of the counter p correspond to the players AAA, BBB and CCC in that order in the character table Ta2 shown in Fig. 8. Thus, the information on the player who swings is acquired.

Next, it is judged if the information acquired at the step S252 is on the player controlled by the system user (step S254). In this embodiment, the condition for the step S254 is met when the count of the counter is 1, that is to say, if the acquired information is on the first player AAA in the character table Ta2. If this condition is met, various swinging conditions are selected in the condition entry column 53d provided in a left and lower portion of the game status screen 53. The swinging conditions include the golf club and the distance between the current ball position and a target point. Thus, the swinging conditions (step S256) are acquired. It is possible to select the club etc. by referring to a table (not shown) stored in the ROM 21, and acquiring information on them from this table. Subsequently, information on the swinging actions are entered with the stick etc. on the console panel 30. Thus, the information on the swinging actions are acquired (step s258) Then, the process of information acquisition ends. The information on the swinging actions includes the speeds at which the players swing their arms and the directions in which the arms move.

If the condition is not met at the step S254, the information acquired at the step S252 is on one of the players controlled automatically by the game apparatus 100. Then, the process of information acquisition moves to the step S260, where various swinging conditions are decided and thus acquired. As an example, the club selection involves calculating the distance between the current position and the cup, and selecting a club from a table (not shown) in which different ranges of distance are each associated with a club. The selection may involve generating a random number and adding it to the distance between the current position and the cup so that a different club may be selected for the same distance. Subsequently, the player's swinging actions are decided, and information on them is acquired (step S262). Then, the process ends. Another table (not shown) may be provided in which different ranges of distance are each associated with a speed at which a player swings his or her arm. It is possible to acquire from this table the speed at which the player swings his or her arm. The direction to the cup may be calculated from the player's position so that the direction in which his or her arms move can be acquired. The acquisition of speed and direction may involve generating other random numbers so as to vary the speed at which the arms are swung and the direction in which they are moved.

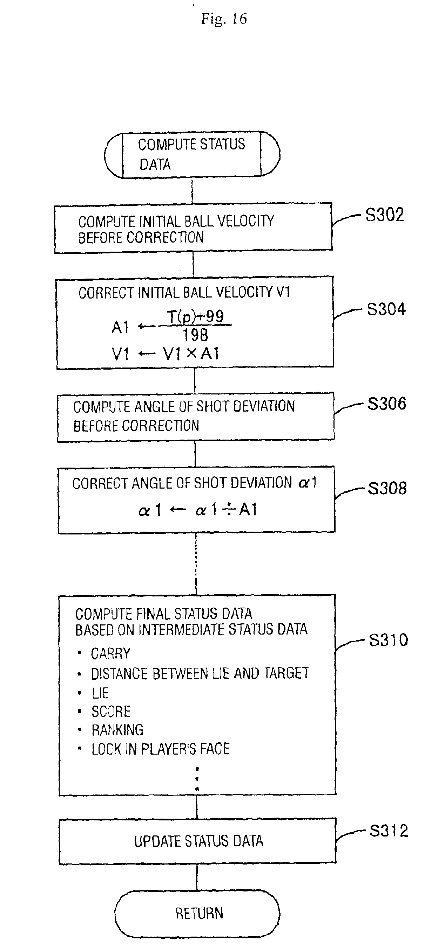

After the process of acquiring information on the players' actions, the step S125 of Fig. 10 is executed to compute status data. Fig. 16 is a flowchart showing the process of status data computation occasionally with operation expressions. This process includes sequentially computing various status data with the motivation parameters used by the motivation reflecting function P4. The processing at the steps S302 - S308 of Fig. 16 realizes the reflecting function P4. When the process is executed initially, all of the internal, external and general parameters of the motivation parameters are 70 as predetermined.

First, intermediate status data for the computation of final status data are sequentially computed. At the step S302, the initial ball velocity V1 that has not been corrected is computed. The initial velocity is equivalent to the club head speed and can be computed from the speed at which the player's arms are swung. Next, the initial ball velocity is corrected with the motivation parameters (step S304). The general parameter for each player may be represented as a variable $T(p)$. The variable p is the count of the counter p. A correction factor A1 increases with the general parameter and may be expressed as follows:

$$A1 = \{T(p) + 99\}/198 \qquad (1).$$

The initial ball velocity V1 can be corrected by being multiplied by the correction factor A1. As the general parameter $T(p)$ ranges from 0 to 99, the correction factor A1 ranges from 0.5 to 1. A larger general parameter makes the correction factor A1 larger and accordingly causes the initial velocity V1 to be corrected to a larger value. A smaller general parameter causes the initial velocity V1 to be corrected to a smaller value. As a result, a larger general parameter makes the carry larger.

At the step S306, the angle of shot deviation $\alpha1$ that has not been corrected is computed. It is possible to compute the angle of shot deviation by generating a random number and multiplying the angle by a predetermined value. Next, the angle of shot deviation is corrected with the motivation parameter (step S308). For example, the angle of shot deviation $\alpha1$ may be corrected by being divided by the correction factor A1, which is found from the expression (1). A larger general parameter causes the angle of shot deviation $\alpha1$ to be corrected to a smaller value. A smaller general parameter causes the angle of shot deviation $\alpha1$ to be corrected to a larger value. As a result, a larger general parameter makes the shot deviation smaller.

After other intermediate status data are computed (not shown), the final status data are computed sequentially on the basis of them (step S310). The final status data are the status data D1 shown in Fig. 3. As an example, the carry may be computed with the initial ball velocity V1, the angle of shot deviation $\alpha1$, etc. by reference to various data in the game status data storage area of the ROM 21. These various data include data on the geographical features of the golf course, data for ball locus calculation, and data for the correction of the influence of the climate such as the wind. The current ball position is found out during the carry computation. The type of the place where the ball has stopped is acquired by reference to the data on the geographical features of the golf course in the game status data storage area. The place type is one of a green, a bunker, etc. In addition, the score, the ranking, etc. are computed. The computation of the look in the player's face involves converting the general parameter into an integer ranging from 1 to 5, and may involve dividing this parameter by 20, adding 1 to the quotient and rounding off the fraction of the sum.

Subsequently at the step S312, the status data D1 in the RAM 14 are updated to the status data computed at the step S310. Then, the process of status data computation ends.

Thus, the came apparatus 100 executes the steps S252-S262, S310 and S312 to acquire information on the players' actions, and executes the step S125 to compute the status data representing the game statuses associated with the actions on the basis of the acquired information. In other words, the computer implements the status data computing function P1.

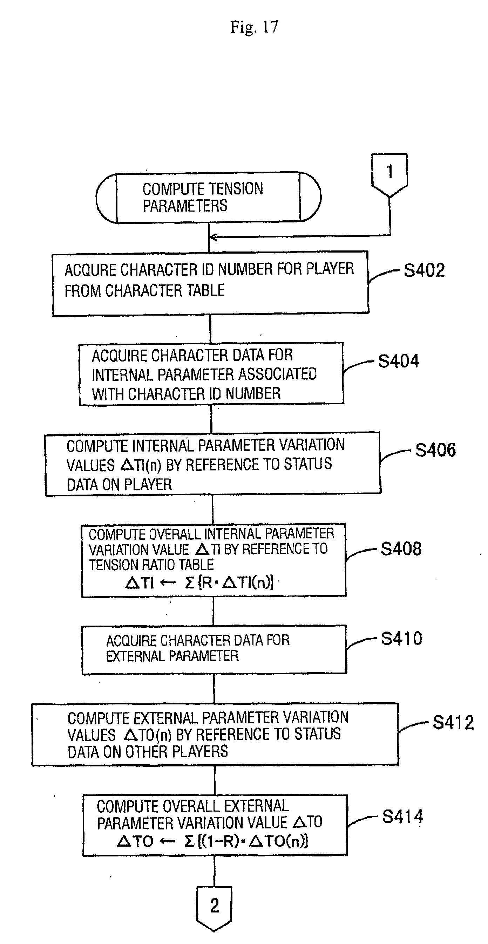

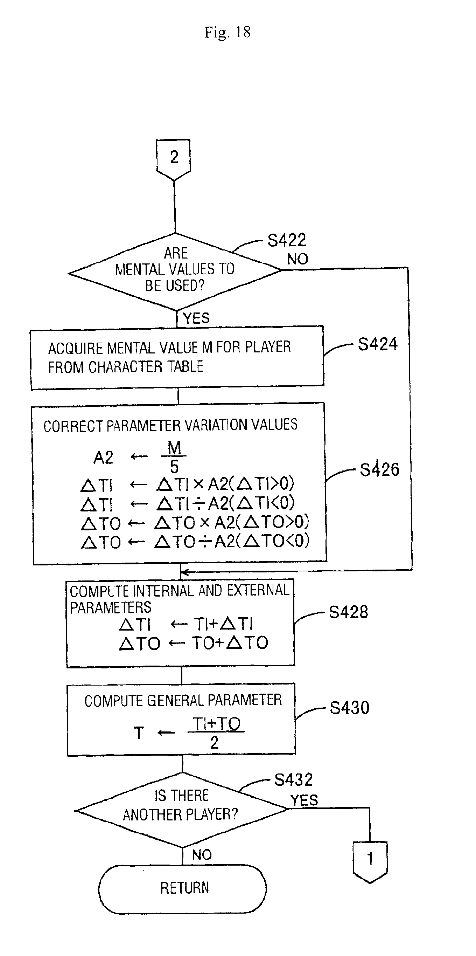

After the process of status data computation, the motivation parameters are computed at the step S130. Figs. 17 and 18 are a flowchart showing the process of motivation parameter computation occasionally with operation expressions. This process includes sequentially computing the internal, external and general parameters of the motivation parameters.

First, the character ID number for the player for whom a motivation parameter is to be computed is acquired from the character table Ta2 in the RAM 14 (step S402). Next, the character data D2 that are associated with the acquired ID number are acquired from the character data storage area in the ROM 21 (step S404).

If this particular player is AAA, for example, the character ID number 1 is acquired from the character table Ta2 of Fig. 8, and the character data D21 are acquired from the character data D2 of Fig. 4.

Thereafter, internal parameter variation values $\Delta TI(n)$ are computed sequentially by reference to the status data on the player in the status data D1 (Fig. 3) in the RAM 14 (step S406) . The variable n varies to correspond to the various items of the status data D1. The variable n is 1 for the score and 2 for the ranking, for example, in the status data D1.

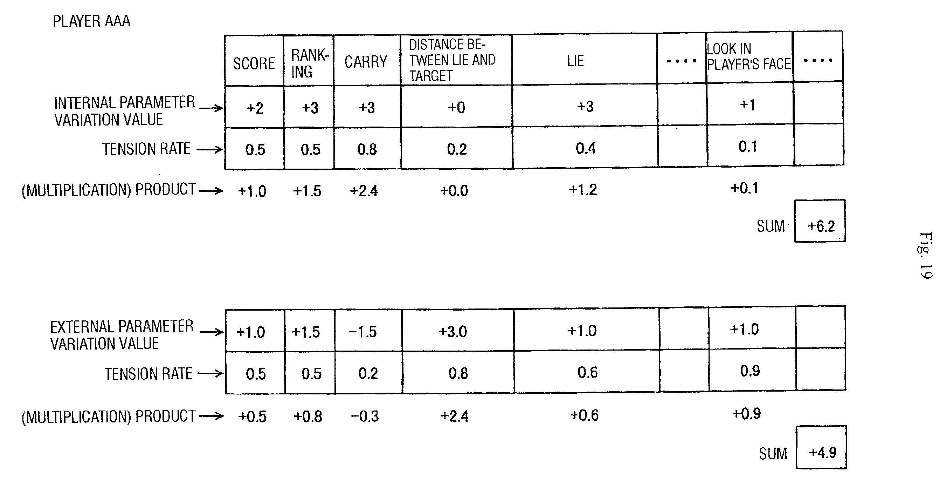

In the example shown in Fig. 3, the status data D11 are associated with the player AAA. If the variable n is 1, the status datum D11 is the score of -3. If this player's score ranges from -4 to -1, the character datum D21 associated with the score is +2, and accordingly the internal parameter variation value $\Delta TI(1)$ is +2. If the variable n is 2, the status datum D11 is the ranking of 1. If this player's ranking is 1, the associated character datum D21 is +3, and accordingly the internal parameter variation value $\Delta TI(2)$ is +3. Fig. 19 shows the internal parameter variation values $\Delta TI(n)$ computed sequentially in this way for the player AAA.

At the step S408, an overall internal parameter variation value $\Delta TI$ is computed by reference to the motivation ratio table Ta3 in the ROM 21. The computation involves multiplying each internal parameter variation value $\Delta TI(n)$ by the associated rate of motivation R in the motivation ratio table Ta3, and adding the products. In the example shown in Fig. 19, the internal parameter variation value $\Delta TI(1)$ and the rate of motivation that are associated with the score are +2 and 0.5 respectively. The product of the variation value and the rate of motivation is +1.0. Similar multiplication is done for the ranking and the other items. All of the products are added together, and the sum is +6.2, which is the overall internal parameter variation value $\Delta TI$.

The step S410 is the step of acquiring from the character data storage area in the ROM 21 the character data D3 that are associated with the character ID number acquired at the step S402. If the player is AAA, the character data D31 are acquired from the character data D3 in Fig. 5. Thereafter, external parameter variation values $\Delta TO(n)$ are computed sequentially by reference to the status data on the other player or players in the status data D1 in the RAM 14 (step S412). If the other players are plural, the variation values $\Delta TO(n)$ computed for them are averaged.

In the example shown in Fig. 3, the status data on the players other than the player AAA are D12 and D13. The scores of the players BBB and CCC are +2 and 0 respectively. The character data D31 (Fig. 5) that are associated with the score are +2 and 0 if the score ranges from +1 to +4 and is 0, respectively. The external parameter variation value $\Delta TI(1)$ for the variable n of 1 is +1, which is the average of +2 and 0. Fig. 19 also shows the external parameter variation values $\Delta TO(n)$ computed sequentially in this way.

At the step S414, an overall external parameter variation value $\Delta TO$ is computed by reference to the motivation ratio table Ta3 in the ROM 21. As stated already, each of the rates of reflection of the external parameter is the remainder of 1 from which the associated rate in the ratio table Ta3 is subtracted. The computation of the overall external parameter variation value $\Delta TO$ involves multiplying each external parameter variation value $\Delta TO(n)$ by the remainder (1 - R) of 1 from which the associated rate of motivation R in the ratio table Ta3 is subtracted, and adding the products together. In the example shown in Fig. 19, the external parameter variation value $\Delta TO(1)$ associated with the carry is -1.5, and the rate of motivation for the external parameter (1 - R) is 0.2. The product of -1.5 and 0.2 for the carry is -0.3. The sum of all the products is +4.9, which is the overall external parameter variation value $\Delta TO$.

After the parameter variation values $\Delta TI$ and $\Delta TO$ are found, the process of motivation parameter computation moves to the step S422 in Fig 18. At the step S422, it is judged whether to use the mental values for the motivation parameter computation. If it is decided at the step S208 (Fig. 11) that the mental values shall not be used, the condition for the step S422 is not met. Then, the process skips the steps S424 and S426, and moves to the step S428. If it is decided that the mental values shall be used, the mental value M for each player is acquired from the character table Ta2 (Fig. 8) in the RAM 14 (step S424). In the example shown in Fig. 8, the mental value M of 3 is acquired for the player AAA.

Thereafter, the parameter variation values $\Delta TI$ and $\Delta TO$ are corrected with the mental values M (step S426). A correction factor A2 may be expressed as follows:

$$A2 = M/5 \qquad (2).$$

Because the mental values M are integers between 1 and 10, the correction factor A2 ranges from 0.2 to 2. If the internal parameter variation value $\Delta TI$ is larger than 0 ($\Delta TI > 0$), it is corrected by being multiplied by the correction factor A2. If this variation value $\Delta TI$ is smaller than 0 ($\Delta TI < 0$), it is corrected by being divided by the correction factor A2. As stated already, a player is not liable to be less tense and is quicker to recover motivation if his or her mental value M is larger. If the mental value M is such a large value that the correction factor A2 may be larger than 1, the correction increases the internal parameter variation values $\Delta TI$. In this case, if the variation value $\Delta TI$ is negative, its absolute value is decreased. Likewise, the external parameter variation value $\Delta TO$ is corrected.

At the step S428, the internal and external parameters TI and TO are computed with the parameter variation values $\Delta TI$ and $\Delta TO$. Specifically, the computation involves adding the internal and external parameter variation values $\Delta TI$ and $\Delta TO$ to the internal and external parameters TI and TO respectively to update the parameters TI and TO. After the addition, the updated parameters TI and TO are rounded off to be integral.

The next step S430 is the step of computing the general parameter T by averaging the parameters TI and TO. During this step, the sum of the parameters TI and TO is rounded off so that the general parameter T may be integral.

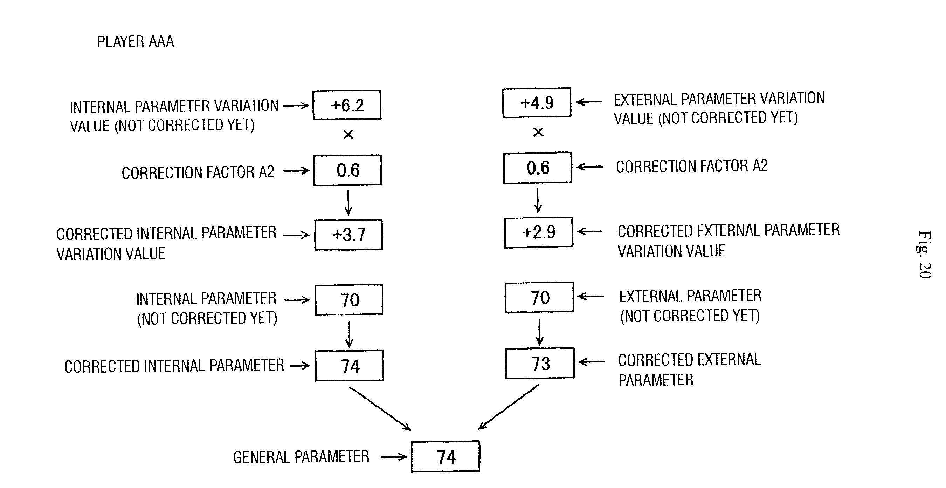

If the parameter variation values ΔTI and ΔTO that have not been corrected are +6.2 and +4.9 respectively, and if the correction factor A2 is 0.6, which is associated with the mental value M of 3, as shown in Fig. 20, the corrected variation values ΔTI and ΔTO are +3.7 and +2.9 respectively. As also shown, the internal and external parameters TI and TO that have not been corrected may both be 70. The corrected variation values ΔTI and ΔTO are added to these parameters TI and TO respectively, and the sums are rounded off, so that the parameters TI and TO are 74 and 73 respectively. Then, the parameters TI and TO are averaged, and the average of them is rounded off, so that the general parameter is 74.

At the step S432, it is judged if there is another player for whom the motivation parameters are to be computed. If so, the steps S402 - S432 are repeated. If not, the process of motivation parameter computation ends.

Thus, the game apparatus 100 computes the motivation parameters, which represent the players' mental states, on the basis of the game statuses by the process of information entry at the step S105 and the process of motivation parameter computation at the step S130. The computation of the motivation parameters includes computing the motivation parameters for each player on the basis of the status data on the other players, acquiring the character data on him or her from the character data storage area, and computing the motivation parameters based on the acquired character data. In other words, the computer implements the motivation parameter computing function P3.

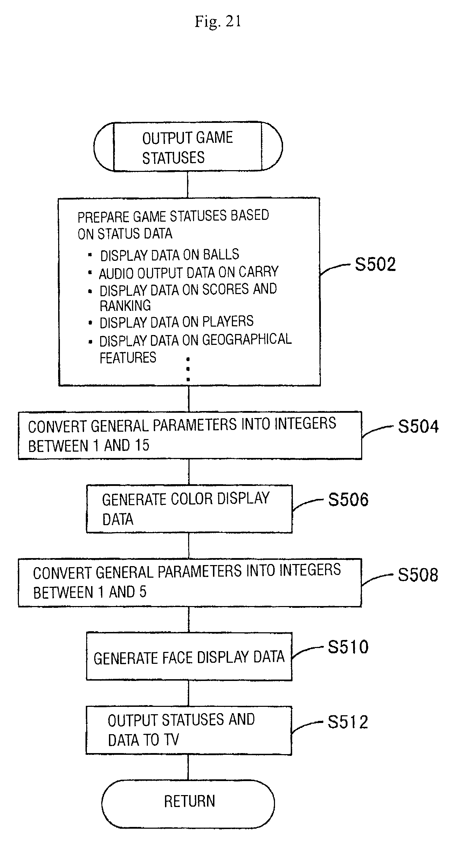

The process of motivation parameter computation is followed by the step S135, which is a process for outputting the game statuses. Fig. 21 is a flowchart of this process.

First, game statuses are prepared on the basis of the status data generated (step S502) by the process of status data computation at the step S125. The game statuses include display data on the balls, which result from the players' swinging actions, audio output data on the carry, display data on the players' scores and ranking, display data on the players, and display data on the geographical features of the golf course that do not directly influence the swinging actions.

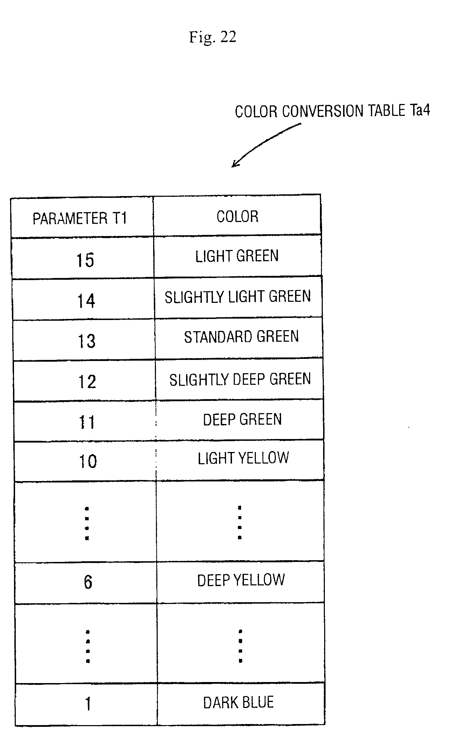

Thereafter, the general parameter T computed by the process of motivation parameter computation at the step S130 is converted into an integral parameter T1 ranging from 1 to 15 (step S504). Because the general parameter T is an integer ranging from 0 to 99, the conversion may include the steps of dividing the general parameter T by 7, adding 1 to the quotient and rounding off the fraction of the sum. Alternatively, the conversion may involve using a conversion table (not shown). For the reflection of the different players' characters, the general parameters T for the players may be converted in different ways into parameters T1. Next, on the basis of the parameters T1 for the players, color display data are generated (step S506) for displaying the mental lamps 53c on the game status screen 53, which is shown in Fig. 14. Fig. 22 is a color conversion table Ta4, which is provided in the ROM 21, and in which the parameters T1 are assigned the colors representing the mental lamps 53c. The generation of color display data involves acquiring from the color conversion table Ta4 the colors associated with the parameters T1. Each general parameter T is the average of the associated internal and external parameters. Accordingly, after the internal and external parameters are averaged, the resultant motivation parameter is displayed.

As an example, if the general parameter T for one of the players is 80, the resultant parameter T1 is 12. In this case, slightly deep green is acquired from the color conversion table Ta4 in Fig. 22. This results in the generation of color display data for making the color of the associated mental lamp 53c slightly deep green. As another example, if the general parameter T is 39, the resultant parameter T1 is 6, and deep yellow is acquired. This results in the generation of color display data for making the color of the mental lamp 53c deep yellow.

If one of the players eagles a hole, shoots (hits) a ball from a bunker direct into the cup, or gets another miraculous or super shot, a red color display datum is generated.

After the step S506, the general parameter T is converted into an integral parameter T2 ranging from 1 to 5 (step S508). The conversion may include the steps of dividing the general parameter T by 20, adding 1 to the quotient and rounding off the fraction of the sum. Alternatively, the conversion may involve using a conversion table (not shown). The general parameters T for the different players may be converted in different ways into parameters T2 . Next, on the basis of the parameters T2 for the players 53a (Fig. 14), face display data are generated (step S510) for the players' faces displayed on the game status screen 53. In the ROM 21, a conversion table (not shown) is provided in which each of the parameters T2 is assigned a face display datum. The face display data are generated by reference to this conversion table. As the parameter T2 for each player increases from 1 to 5, the look in his or her face turns dark, slightly dark, usual, slightly cheerful, and cheerful in that order. As an example, if the general parameter T for one of the players is 80, the resultant parameter T2 is 5. In this case, the face display datum for a cheerful look is generated. As another example, if the general parameter T is 39, the resultant parameter T2 is 2. In this case, the face display datum for a slightly dark look is generated.

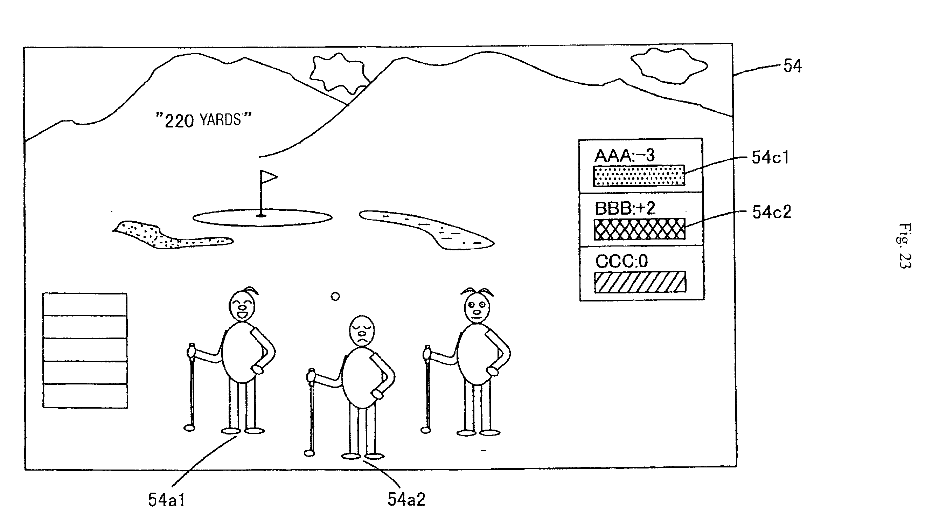

Thereafter, the prepared game statuses and the generated color and face display data are output to the television 40 (step S512). Subsequently, the game status output process ends. Then, the television 40 displays a game status screen 54 as shown in Fig. 23 and announces the carry etc. There may be a case where the general parameter T for the player AAA, who corresponds to a player 54a1 on the status screen 54, is 80. In this case, the face display datum for a cheerful look is generated, as stated above, and consequently the player 54a1 looks cheerful. In the meantime, the color display datum for slightly deep green is generated, and consequently the color of the mental lamp 54c1 corresponding to the player AAA is slightly deep green. As another example, if the general parameter T for the player BBB is 39, the corresponding player 54a2 looks slightly dark, and the color of the corresponding mental lamp 54c2 is deep yellow.

That is to say, the processes at the steps S504 - S512 makes the computer implement the motivation display function P21 for displaying the motivation parameters. The motivation of each player is represented by the look in his or her face and one of the color phases. Consequently, the user of the game apparatus 100 can know the players' mental states at a glance and enjoy the game while visually recognizing the displays about the mental states. Because the displayed motivation parameters are the averages of the internal and external parameters, it is easy to grasp the players' mental states.

Thus, the game apparatus 100 executes the steps S502-S512 to prepare and output golf game statuses based on the status data. That is to say, the computer implements the game status output function P2.

After the game status output process, it is judged whether to end the game (step S140). If one of the players is playing, the steps S120 - S140 are repeated. Then, the motivation parameters, which consist of the internal and external parameters computed at the step S130, are used for the steps S302 - S308 in Fig. 16, which implement the motivation reflecting function P4. As a result, status data reflecting the motivation parameters representing the players' mental states are computed. At the step S135, golf game statuses based on the status data are prepared and output.

That is to say, each player's motivation, which varies with various status data, is reflected in the status data provided for him or her, and in his or her game status. It is consequently possible to enjoy the psychological developments in the game with the players' mental states reflected in the game. Each player's mental state varies with his or her and the other players' game statuses. It is consequently possible to enjoy the players' tactics or strategies and therefore make the game more enjoyable.

5. Second Embodiment

Two or more virtual players compete in the first embodiment. It is alternatively possible to enjoy a golf game with one virtual player by setting the number of players at 1 at the step S202 in Fig. 11. The status data on this player reflects the internal parameter representing his or her mental state. In this case, the external parameters based on the status data on any other players are not used. Consequently, the game status output from the television 40 reflects the player's mental state. This makes the golf game reflect the mental state, making it possible to enjoy the psychological developments in the game. If the climate data D4 shown in Fig. 6 are used for the motivation parameter computation, the game status can reflect the mental state and the climate such as the weather and wind. This makes it possible to enjoy more complex golf game status.

As stated already, the reflection of the motivation parameters in the status data during the process of status data computation shown in Fig. 16 involves the multiplication and division by correction factors at the steps S302 - S308. Alternatively, the reflection of the motivation parameters in the status data may involve converting the status data by reference to a status data conversion table (not shown) in which each of the motivation parameters is associated with one of the status data that have not been converted. This conversion table may be stored in the ROM 21 of the storage element cassette. Different correction factors or different status data conversion tables might be provided for the internal and external parameters so that the status data could directly reflect the respective parameters.

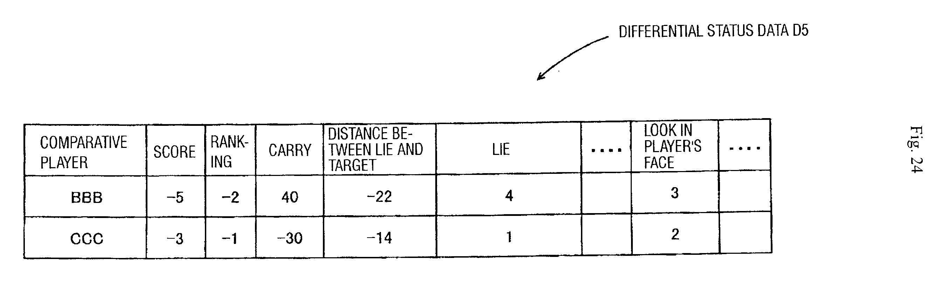

When the motivation parameters for each player are computed by the process shown in Figs. 17 and 18, these parameters may be varied with the difference between the status data on him or her and each of the other players. In this case, differential (or subtractive) status data D5 as shown in Fig. 24 may be generated for each player and stored in the RAM 14. Each of the differential status data D5 is the remainder of one of the status data on the player from which the associated status datum on one of the other players is subtracted. The status data D5 and D1 (Fig. 3) have the same items such as the score. The differential status data D5 are classified under the other players. There may be a case where status data D1 as shown in Fig. 3 are prepared. In this case, the differential status datum D5 for the score that is associated with the comparative player BBB is the remainder of the status datum D1 of -3 from which the status datum D1 of +2 is subtracted, leaving -5. Likewise, the differential status datum D5 for the score that is associated with the comparative player CCC is the remainder of the status datum D1 of -3 from which the status datum D1 of 0 is subtracted, leaving -3.

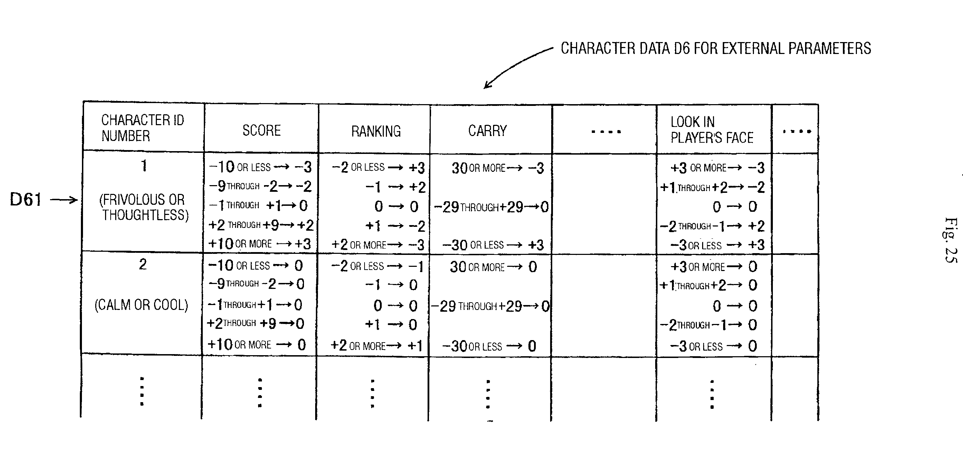

In place of the character data D3, character data D6 as shown in Fig. 25 may be stored in the character data storage area of the ROM 21 for the computation of the external parameters by reference to the differential status data D5. The items of the character data D6 correspond to those of the differential status data D5. The data stored at the items are based on the differential values.

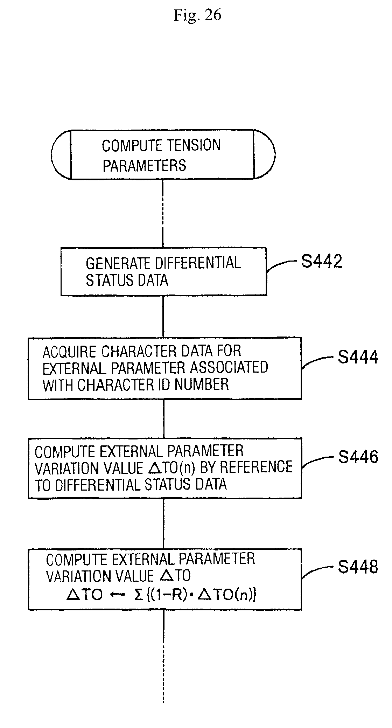

The external parameters may be computed with the differential status data D5 and the character data D6 according to the flowchart shown in Fig. 26, which replaces the steps S410 - S414.

In this case, the step S408, where the internal parameter variation value ΔTI for each player is computed, is followed by the step S442, where each status datum on each of the other players is subtracted from the associated status datum on that player, leaving a differential status datum D5. At the next step S444, the character data associated with the character ID number acquired at the step S402 are acquired out of the character data D6 shown in Fig. 25. For the player AAA, who is associated with the character ID number 1, the character data D61 are acquired out of the data D6. At the next step S446, the external parameter variation values ΔTO(n) are computed sequentially by reference to the differential status data D5 in the RAM 14. If there are two or more other players, variation values ΔTO(n) computed for them are averaged.

In the example shown in Fig. 24, the differential status data D5 with respect to the scores (variable n = 1) of the comparative players BBB and CCC are -5 and -3 respectively. The character datum D61 (Fig. 25) for the score is -2 for the score between -9 and -2. Accordingly, the character data D61 of -2 are acquired with respect to the players BBB and CCC. The external parameter variation value ΔTO(1) is -2, which is the average of these character data.

At the next step S448, an overall external parameter variation value ΔTO is computed by reference to the motivation ratio table Ta3 in the ROM 21. Similarly to the step S414, the computation of the overall external parameter variation value ΔTO involves multiplying each external parameter variation value ΔTO(n) by the remainder (1 - R) of 1 from which the associated rate of motivation R in the ratio table Ta3 is subtracted, and adding the products together.

The step S448 is followed by the steps S422 - S432 for computing the internal, external and general parameters TI, TO and T. Then, at the step S135 in Fig. 10, the game statuses are output, and the motivation parameters are displayed. If the game is continued, the status data computation reflects the motivation parameters at the step S125. As a result, each player's motivation, which varies with the various status data, varies with his or her and the other players' game statuses. This makes it possible to enjoy the players' tactics.

6. Third Embodiment

In the game status output process shown in Fig. 21, the motivation parameters can be indicated by the mental lamps and in other forms.

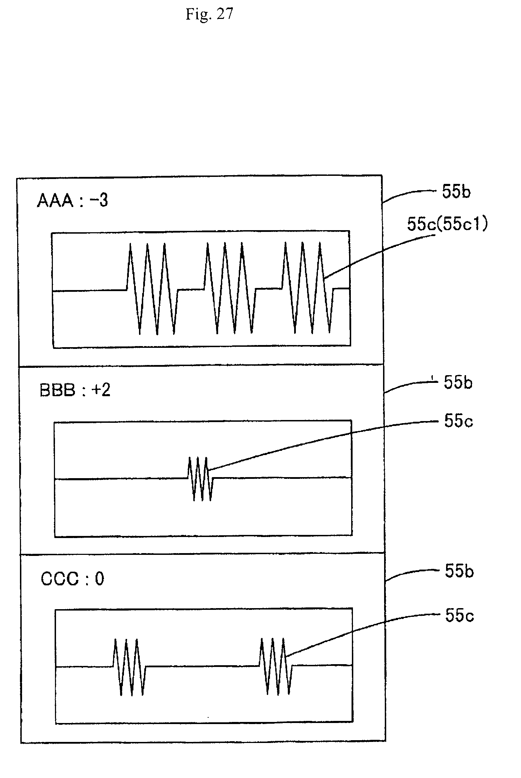

As an example, Fig. 27 shows the indication of motivation parameters in electrocardiographic waves. Specifically, Fig. 27 shows score indicators 55b, which may replace the score indicators 53b on the game status screen 53 in Fig. 14. Each player is associated with the electrocardiographic wave 55c indicated in one of the score indicators 55b.

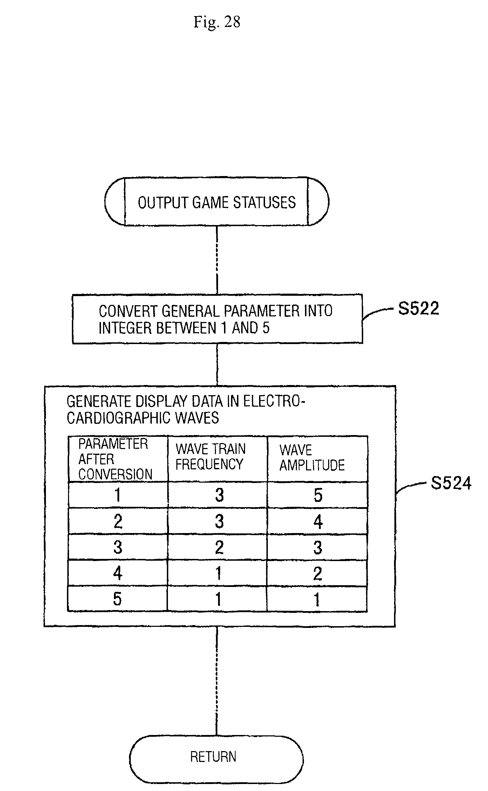

Fig. 28 is a flowchart according to which the electrocardiographic waves 55c may be indicated, and which may replace the steps S504 and S506 in Fig. 21.

In this case, the step S502, where game statuses are prepared, is followed by the step S522, where the general parameter T is converted into a parameter T3 that is an integer between 1 and 5. As is the case with the parameter T2, the conversion into the parameter T3 may include the steps of dividing the general parameter T by 20, adding 1 to the quotient and rounding off the fraction of the sum. Next, based on the parameter T3, display data for the associated electrocardiographic wave 55c are generated at the step S524. The ROM 21 has a conversion table in which each parameter T3 is associated with a wave train frequency and a wave amplitude value. The electrocardiographic waves 55c are generated by reference to the conversion table. As an example, if the general parameter T is 80, the associated parameter T3 is 5. In this case, as shown in Fig. 27, such display data are generated that electrocardiographic waves 55c1 are formed, which include 3 wave trains and have an amplitude value of 5.

Thereafter, at the step S512, the display data in electrocardiographic waves are output together with the game statuses to the television 40, on which the electrocardiographic waves 55c (Fig. 27) are displayed. The displayed waves 55c are associated with the motivation parameters for the respective players. Thus, the players' motivations are indicated in electrocardiographic waves, which enable the user of the game apparatus 100 to know the mental states of the players as images at a glance.

As described hereinbefore, the present invention enables a game status to reflect the mental state of an entity such as a golf player in various manners and forms. This makes it possible to provide a game program that causes a game to reflect an entity's mental state so that the psychological developments in the game can be enjoyed. The program can be provided as recorded on a medium.

**Claims**

1. A game program for preparing and outputting game status in response to an entity's action is recorded, the program causing a computer to implement:

   a status data computing function for acquiring information about said entity's action and, on the basis of the acquired information, computing status data representing the game status;
   a game status output function for preparing and outputting game status based on the status data;
   a motivation parameter computing function for computing a motivation parameter representing said entity's mental state on the basis of the game status; and

a motivation reflecting function for causing the computed status data to reflect the motivation parameter.

2.  A game program for preparing and outputting game statuses in response to the actions of at least two entities is recorded, each of the statuses being associated with one of said entities, the program causing a computer to implement:

    a status data computing function for acquiring information about said entities' actions and, on the basis of the acquired information, computing status data each representing one of the game statuses;
    a game status output function for preparing and outputting game statuses based on the status data;
    a motivation parameter computing function for computing motivation parameters each representing the mental state of one of said entities on the basis of the respective game statuses; and
    a motivation reflecting function for causing the computed status data to each reflect the associated motivation parameter.

3.  The game program defined in Claim 2 is recorded wherein the motivation parameter computing function involves computing the motivation parameter for each of the entities on the basis of the status data on the other entity.

4.  The game program defined in Claim 3 is recorded wherein the status data are values associated with the respective entities' records, the motivation parameter computing function involving computing the motivation parameter for each of the entities with the parameter varied with the difference between the status data on the entities.

5.  The game program defined in Claim 2 is recorded wherein the motivation parameter computing function involves computing the motivation parameter for each of the entities on the basis of a character datum on the entity's character acquired from a character data storage area in which character data on the entities' characters are stored.

6.  The game program defined in Claim 5 is recorded wherein the motivation parameter computing function includes a character selection entry function for receiving the selective entry of the entities' characters, the motivation parameter computing function involving computing the motivation parameter for each of the entities by acquiring from the character data storage area the character datum about the associated character entered selectively in the area.

7.  The game program defined in Claim 2 is recorded wherein the motivation parameter computing function includes a mental value setting function for receiving the setting entry of mental values each based on one of the entities' characters, the motivation parameter computing function involving computing the motivation parameter for each of the entities on the basis of the associated mental value set and entered.

8.  The game program defined in Claim 2 is recorded wherein the motivation parameters include internal and external parameters, the motivation parameter computing function involving computing the motivation parameter for each of the entities by computing the associated internal parameter based on the associated status data and the associated external parameter based on the status data on the other entity.

9.  The game program defined in Claim 8 is recorded wherein the motivation reflecting function involves varying, with the type of the status data on each of the entities, the ratio between the associated internal and external parameters reflected in the status data.

10. The game program defined in Claim 8 is recorded wherein the game status output function includes a motivation display function for displaying the motivation parameters.

11. The game program defined in Claim 10 is recorded wherein the motivation display function involves displaying the motivation parameter for each of the entities by averaging the associated internal and external parameters.

12. The game program defined in Claim 10 is recorded wherein the motivation display function involves displaying the motivation parameters in color phases.

13. The game program defined in Claim 10 is recorded wherein the motivation display function involves displaying the motivation parameters in electrocardiographic waves.

14. The game program defined in Claim 10 is recorded wherein the motivation display function involves displaying the motivation parameters in the form of the looks in the entities' faces.

15. The game program defined in Claim 2 is recorded wherein the entities are golf players, the status data computing function involves computing the status data representing a golf game status in response to the play of each of the players.

16. The game program defined in Claim 15 is recorded wherein the status data on each of the players is any or a combination of the player's score, the player's ranking, the player's carry, the distance between the player's ball and a target, and the type of the place where the ball is positioned.

17. A game apparatus for preparing and outputting game status in response to an entity's action, comprising:

status data computing means for acquiring information about the entity's action and, on the basis of the acquired information, computing status data representing the game status;

game status output means for preparing and outputting game status based on the status data;

motivation parameter computing means for computing a motivation parameter representing the entity's mental state on the basis of the game status; and

motivation reflecting means for causing the computed status data to reflect the motivation parameter.

18. A method for carrying out a game by preparing and outputting game status in response to an entity's action, comprising:

a status data computing step for acquiring information about the entity's action and, on the basis of the acquired information, computing status data representing the game status;

a game status output step for preparing and outputting game status based on the status data;

a motivation parameter computing step for computing a motivation parameter representing the entity's mental state on the basis of the game status; and

a motivation reflecting step for causing the computed status data to reflect the motivation parameter.

Fig. 1

Fig. 2

GAME STATUS DATA STORAGE AREA

CHARACTER DATA STORAGE AREA

CHARACTER DATA

P1 — STATUS DATA COMPUTING FUNCTION

TENSION PARAMETER COMPUTING FUNCTION — P3

STATUS DATA

CHARACTER SELECTION ENTRY FUNCTION — P31

MENTAL VALUE SETTING FUNCTION — P32

TENSION PARAMETERS
{ INTERNAL PARAMETER
EXTERNAL PARAMETER

P2 — GAME STATUS OUTPUT FUNCTION

P21 — TENSION DISPLAY FUNCTION

TENSION REFLECTING FUNCTION — P4

GAME PROGRAM P

GAME STATUSES

18

Fig. 3

STATUS DATA D1

| | PLAYER | SCORE | RANK-ING | CARRY | DISTANCE BE-TWEEN LIE AND TARGET | LIE | .... | LOOK IN PLAYER'S FACE | .... |
|---|---|---|---|---|---|---|---|---|---|
| D11 → | AAA | −3 | 1 | 220 | 5 | 5 (GREEN) | | 5 (BRIGHT) | |
| D12 → | BBB | +2 | 3 | 180 | 27 | 1 (BUNKER) | | 2 (SLIGHTLY DARK) | |
| D13 → | CCC | 0 | 2 | 250 | 19 | 4 (REAR OF GREEN) | | 3 (USUAL) | |

19

Fig. 4

CHARACTER DATA D2 FOR INTERNAL PARAMETERS

D21 →

| CHARACTER ID NUMBER | SCORE | RANKING | CARRY | DISTANCE BE-TWEEN LIE AND TARGET | LIE | . . . . |
|---|---|---|---|---|---|---|
| 1<br><br>(FRIVOLOUS OR THOUGHTLESS) | $-5$ OR LESS $\rightarrow$ $+3$<br>$-4$ through $-1$ $\rightarrow$ $+2$<br>$0 \rightarrow 0$<br>$+1$ through $+4 \rightarrow -2$<br>$+5$ OR MORE $\rightarrow -3$ | $1 \rightarrow +3$<br><br>$2 \rightarrow 0$<br><br>$3$ OR LOWER $\rightarrow -3$ | MORE THAN 200 $\rightarrow +3$<br><br>100 THROUGH 200 $\rightarrow 0$<br><br>LESS THAN 100 $\rightarrow -3$ | LESS THAN 5 $\rightarrow +3$<br><br>5 THROUGH 10 $\rightarrow 0$<br><br>MORE THAN 10 $\rightarrow -3$ | GREEN $\rightarrow +3$<br>REAR OF GREEN $\rightarrow +1$<br>$\vdots$<br>BUNKER $\rightarrow -3$ | |
| 2<br><br>(CALM OR COOL) | $-5$ OR LESS $\rightarrow 0$<br>$-4$ through $-1 \rightarrow 0$<br>$0 \rightarrow 0$<br>$+1$ through $+4 \rightarrow 0$<br>$+5$ OR MORE $\rightarrow 0$ | $1 \rightarrow -1$<br><br>$2 \rightarrow 0$<br><br>$3$ OR LOWER $\rightarrow +1$ | MORE THAN 200 $\rightarrow 0$<br><br>100 THROUGH 200 $\rightarrow 0$<br><br>LESS THAN 100 $\rightarrow 0$ | LESS THAN 5 $\rightarrow 0$<br><br>5 THROUGH 10 $\rightarrow 0$<br><br>MORE THAN 10 $\rightarrow 0$ | GREEN $\rightarrow -1$<br>REAR OF GREEN $\rightarrow 0$<br>$\vdots$<br>BUNKER $\rightarrow +1$ | |
| 3<br><br>(NERVOUS ABOUT COMPETITORS) | $-5$ OR LESS $\rightarrow +1$<br>$-4$ through $-1 \rightarrow 0$<br>$0 \rightarrow 0$<br>$+1$ through $+4 \rightarrow 0$<br>$+5$ OR MORE $\rightarrow -1$ | $1 \rightarrow +2$<br><br>$2 \rightarrow 0$<br><br>$3$ OR LOWER $\rightarrow -2$ | MORE THAN 200 $\rightarrow +1$<br><br>100 THROUGH 200 $\rightarrow 0$<br><br>LESS THAN 100 $\rightarrow -1$ | LESS THAN 5 $\rightarrow +1$<br><br>5 THROUGH 10 $\rightarrow 0$<br><br>MORE THAN 10 $\rightarrow -1$ | GREEN $\rightarrow +2$<br>REAR OF GREEN $\rightarrow +1$<br>$\vdots$<br>BUNKER $\rightarrow -2$ | |
| $\vdots$ | $\vdots$ | $\vdots$ | $\vdots$ | $\vdots$ | $\vdots$ | |

CHARACTER DATA D3 FOR EXTERNAL PARAMETERS

| CHARACTER ID NUMBER | SCORE | RANKING | CARRY | . . . . | LOOK IN PLAYER'S FACE | . . . . |
|---|---|---|---|---|---|---|
| 1<br><br>(FRIVOLOUS OR THOUGHTLESS) | −5 OR LESS → −3<br>−4 through −1 → −2<br>0 → 0<br>+1 through +4 → +2<br>+5 OR MORE → +3 | 1 → −3<br><br>2 → 0<br><br>3 OR LOWER → +3 | MORE THAN 200 → −3<br><br>100 THROUGH 200 → 0<br><br>LESS THAN 100 → +3 | | BRIGHT → −3<br>SLIGHTLY BRIGHT → −2<br>USUAL → 0<br>SLIGHTLY DARK → +2<br>DARK → +3 | |
| 2<br><br>(CALM OR COOL) | −5 OR LESS → 0<br>−4 through −1 → 0<br>0 → 0<br>+1 through +4 → 0<br>+5 OR MORE → 0 | 1 → 0<br><br>2 → 0<br><br>3 OR LOWER → 0 | MORE THAN 200 → 0<br><br>100 THROUGH 200 → 0<br><br>LESS THAN 100 → 0 | | BRIGHT → 0<br>SLIGHTLY BRIGHT → 0<br>USUAL → 0<br>SLIGHTLY DARK → 0<br>DARK → 0 | |
| 3<br><br>(NERVOUS ABOUT COMPETITORS) | −5 OR LESS → −4<br>−4 through −1 → −2<br>0 → 0<br>+1 through +4 → +1<br>+5 OR MORE → +3 | 1 → −5<br><br>2 → 0<br><br>3 OR LOWER → +4 | MORE THAN 200 → −4<br><br>100 THROUGH 200 → 0<br><br>LESS THAN 100 → +4 | | BRIGHT → −3<br>SLIGHTLY BRIGHT → −2<br>USUAL → 0<br>SLIGHTLY DARK → +2<br>DARK → +3 | |
| ⋮ | ⋮ | ⋮ | ⋮ | | ⋮ | |

D31 →

Fig. 5

Fig. 6

CLIMATE-DEPENDENT DATA D4

| CHARACTER ID NUMBER | WEATHER | WIND | . . . . |
|---|---|---|---|
| 1<br><br>(FRIVOLOUS OR THOUGHTLESS) | FINE → +2<br>CLOUDY → 0<br>RAINY → −2 | NO → +2<br>WEAK → 0<br>STRONG → −2 | |
| 2<br><br>(CALM OR COOL) | FINE → 0<br>CLOUDY → 0<br>RAINY → 0 | NO → 0<br>WEAK → 0<br>STRONG → 0 | |
| 3<br><br>(NERVOUS ABOUT COMPETITORS) | FINE → +1<br>CLOUDY → 0<br>RAINY → −1 | NO → +1<br>WEAK → 0<br>STRONG → −1 | |
| ⋮ | ⋮ | ⋮ | |

Fig. 7

MENTAL VALUE TABLE Ta1

| CHARACTER ID NUMBER | MENTAL VALUE |
|---|---|
| 1<br>(FRIVOLOUS OR THOUGHTLESS) | 3 |
| 2<br>(CALM OR COOL) | 7 |
| 3<br>(NERVOUS ABOUT COMPETITORS) | 5 |
| ⋮ | ⋮ |

Fig. 8

CHARACTER TABLE Ta2

| PLAYER | CHARACTER ID NUMBER | MENTAL VALUE |
|--------|---------------------|--------------|
| AAA | 1 | 3 |
| BBB | 3 | 5 |
| CCC | 2 | 7 |

Fig. 9

TENSION RATIO TABLE Ta3

| SCORE | RANKING | CARRY | DISTANCE BE-TWEEN LIE AND TARGET | LIE | . . . . |
|-------|---------|-------|--------------------------------|-----|---------|
| 0.5 | 0.5 | 0.8 | 0.2 | 0.4 | |

Fig. 10

```
                    ┌─────────────────┐
                    │      START      │
                    └────────┬────────┘
                             │
                    ┌────────┴────────┐
                    │ ENTER INFORMATION │──── S105
                    └────────┬────────┘
                             │
                         ╱───┴───╲
                        ╱   CAN   ╲        ─── S110
                       ╱ GAME BE   ╲  NO
                       ╲ STARTED?  ╱─────┐
                        ╲         ╱      │
                         ╲───┬───╱       │
                           YES          │
                    ┌────────┴────────┐  │
                    │ GENERATE INITIAL │ │── S115
                    │ DATA AND OUTPUT  │ │
                    │ INITIAL GAME     │ │
                    │ STATUSES         │ │
                    └────────┬────────┘  │
                             │           │
                    ┌────────┴────────┐  │
                    │ ACQUIRE INFORMATION │── S120
                    │ ON PLAYERS' ACTIONS │
                    └────────┬────────┘  │
                             │           │
                    ┌────────┴────────┐  │
                    │ COMPUTE STATUS   │──── S125
                    │ DATA             │  │
                    └────────┬────────┘  │
                             │           │
                    ┌────────┴────────┐  │
                    │ COMPUTE TENSION  │──── S130
                    │ PARAMETERS       │  │
                    └────────┬────────┘  │
                             │           │
                    ┌────────┴────────┐  │
                    │ OUTPUT PRESENT   │──── S135
                    │ GAME STATUSES    │  │
                    └────────┬────────┘  │
                             │           │
                         ╱───┴───╲       │
                        ╱   CAN   ╲      │── S140
                       ╱ GAME BE   ╲  NO │
                       ╲ ENDED?    ╱─────┘
                        ╲         ╱
                         ╲───┬───╱
                           YES
                    ┌────────┴────────┐
                    │       END       │
                    └─────────────────┘
```

Fig. 11

ENTER
INFORMATION

ENTER NUMBER OF PLAYERS — S202

ENTER PLAYERS' NAMES — S204

ENTER CHARACTERS — S206

ARE
MENTAL VALUES TO BE
USED? — S208
NO

YES

ENTER MENTAL VALUES — S210

MAKE CHARACTER
ASSIGNMENT TABLE — S212

RETURN

CHARACTER SELECTION: You are AAA.

| PLAYER'S NAME | ACCOMPANY-ING PLAYER? | CHARACTER |
|---|---|---|
| AAA | — | 1. FRIVOLOUS OR THOUGHTLESS |
| BBB | YES | 3. NERVOUS ABOUT COMPETITORS |
| CCC | YES | 2. CALM OR COOL |

NEXT

MENTAL VALUE   USE   NONUSE

Fig. 12

28

MENTAL VALUE SETTING — 52

| PLAYER NAME | MENTAL VALUE |
|:-----------:|:------------:|
| AAA | 3 |
| BBB | 5 |
| CCC | 7 |

52a

RETURN

SETTING END

Fig. 13

Fig. 14

Fig. 15

```
            ┌─────────────────────────┐
            │   ACQUIRE INFORMATION   │
            │   ON PLAYERS' ACTIONS   │
            └─────────────────────────┘
                        │
            ┌─────────────────────────┐
            │  ACQUIRE INFORMATION ON │ ─── S252
            │   PLAYER WHO SWINGS     │
            └─────────────────────────┘
                        │
                     ◇ S254
                   IS ACQUIRED
          INFORMATION ON MANUALLY ──── NO ────┐
               CONTROLLED PLAYER?             │
                        │                      │
                      YES                      │
             ┌──── S256 ────┐        ┌──── S260 ────┐
             │ ACQUIRE      │        │ ACQUIRE      │
             │ INFORMATION  │        │ INFORMATION  │
             │ ON CLUB      │        │ ON AUTOMATIC │
             │ SELECTION    │        │ CLUB         │
             │ AND OTHER    │        │ SELECTION    │
             │ SWINGING     │        │ AND OTHER    │
             │ CONDITIONS   │        │ SWINGING     │
             └──────────────┘        │ CONDITIONS   │
                    │                └──────────────┘
             ┌──── S258 ────┐        ┌──── S262 ────┐
             │ ACQUIRE      │        │ DECIDE       │
             │ INFORMATION  │        │ SWINGING     │
             │ ON SWINGING  │        │ ACTIONS AND  │
             │ ACTIONS      │        │ ACQUIRE      │
             └──────────────┘        │ INFORMATION  │
                    │                │ ON SWINGING  │
                    │◄───────────────┤ ACTIONS      │
                    │                └──────────────┘
              ┌──────────┐
              │  RETURN  │
              └──────────┘
```

Fig. 16

```
                    ┌──────────────────────┐
                    │   COMPUTE STATUS     │
                    │   DATA               │
                    └──────────────────────┘
                                │
        ┌───────────────────────────────────────┐
        │  COMPUTE INITIAL BALL VELOCITY         │──── S302
        │  BEFORE CORRECTION                     │
        └───────────────────────────────────────┘
                                │
        ┌───────────────────────────────────────┐
        │  CORRECT INITIAL BALL VELOCITY V1      │──── S304
        │                                        │
        │      A1 ← (T(p)+99)/198                │
        │      V1 ← V1 × A1                       │
        └───────────────────────────────────────┘
                                │
        ┌───────────────────────────────────────┐
        │  COMPUTE ANGLE OF SHOT DEVIATION       │──── S306
        │  BEFORE CORRECTION                     │
        └───────────────────────────────────────┘
                                │
        ┌───────────────────────────────────────┐
        │  CORRECT ANGLE OF SHOT DEVIATION α1    │──── S308
        │      α1 ← α1 ÷ A1                       │
        └───────────────────────────────────────┘
                                ┊
        ┌───────────────────────────────────────┐
        │  COMPUTE FINAL STATUS DATA             │
        │  BASED ON INTERMEDIATE STATUS DATA     │──── S310
        │   · CARRY                              │
        │   · DISTANCE BETWEEN LIE AND TARGET    │
        │   · LIE                                │
        │   · SCORE                              │
        │   · RANKING                            │
        │   · LOCK IN PLAYER'S FACE              │
        │              ┊                         │
        └───────────────────────────────────────┘
                                │
        ┌───────────────────────────────────────┐
        │  UPDATE STATUS DATA                    │──── S312
        └───────────────────────────────────────┘
                                │
                    ┌──────────────────────┐
                    │      RETURN          │
                    └──────────────────────┘
```

Correct Initial Ball Velocity V1:
$$A1 \leftarrow \frac{T(p)+99}{198}$$
$$V1 \leftarrow V1 \times A1$$

Correct Angle of Shot Deviation α1:
$$\alpha 1 \leftarrow \alpha 1 \div A1$$

Fig. 17

```
                                                    ┌───┐
        ╭─────────────────────────╮                 │ 1 │
        │    COMPUTE TENSION       │                 └─┬─┘
        │    PARAMETERS            │                   │
        ╰───────────┬─────────────╯←──────────────────┘
                    │
    ┌───────────────┴───────────────────┐
    │ ACQURE CHARACTER ID NUMBER FOR PLAYER │──── S402
    │ FROM CHARACTER TABLE               │
    └───────────────┬───────────────────┘
                    │
    ┌───────────────┴───────────────┐
    │ ACQUIRE CHARACTER DATA FOR     │──── S404
    │ INTERNAL PARAMETER ASSOCIATED  │
    │ WITH CHARACTER ID NUMBER       │
    └───────────────┬───────────────┘
                    │
    ┌───────────────┴────────────────────┐
    │ COMPUTE INTERNAL PARAMETER VARIATION │──── S406
    │ VALUES ΔTI(n) BY REFERENCE TO STATUS │
    │ DATA ON PLAYER                       │
    └───────────────┬────────────────────┘
                    │
    ┌───────────────┴───────────────────┐
    │ COMPUTE OVERALL INTERNAL PARAMETER │──── S408
    │ VARIATION VALUE ΔTI BY REFERENCE TO │
    │ TENSION RATIO TABLE                │
    │        ΔTI ← Σ{R·ΔTI(n)}           │
    └───────────────┬───────────────────┘
                    │
    ┌───────────────┴───────────────┐
    │ ACQUIRE CHARACTER DATA FOR     │──── S410
    │ EXTERNAL PARAMETER             │
    └───────────────┬───────────────┘
                    │
    ┌───────────────┴────────────────────┐
    │ COMPUTE EXTERNAL PARAMETER VARIATION │──── S412
    │ VALUES ΔTO(n) BY REFERENCE TO STATUS │
    │ DATA ON OTHER PLAYERS               │
    └───────────────┬────────────────────┘
                    │
    ┌───────────────┴───────────────┐
    │ COMPUTE OVERALL EXTERNAL       │──── S414
    │ PARAMETER VARIATION VALUE ΔTO   │
    │   ΔTO ← Σ{(1−R)·ΔTO(n)}         │
    └───────────────┬───────────────┘
                    │
                  ┌─┴─┐
                  │ 2 │
                  └───┘
```

- S402: ACQURE CHARACTER ID NUMBER FOR PLAYER FROM CHARACTER TABLE
- S404: ACQUIRE CHARACTER DATA FOR INTERNAL PARAMETER ASSOCIATED WITH CHARACTER ID NUMBER
- S406: COMPUTE INTERNAL PARAMETER VARIATION VALUES $\Delta TI(n)$ BY REFERENCE TO STATUS DATA ON PLAYER
- S408: COMPUTE OVERALL INTERNAL PARAMETER VARIATION VALUE $\Delta TI$ BY REFERENCE TO TENSION RATIO TABLE $\Delta TI \leftarrow \Sigma \{R \cdot \Delta TI(n)\}$
- S410: ACQUIRE CHARACTER DATA FOR EXTERNAL PARAMETER
- S412: COMPUTE EXTERNAL PARAMETER VARIATION VALUES $\Delta TO(n)$ BY REFERENCE TO STATUS DATA ON OTHER PLAYERS
- S414: COMPUTE OVERALL EXTERNAL PARAMETER VARIATION VALUE $\Delta TO$ $\Delta TO \leftarrow \Sigma \{(1-R) \cdot \Delta TO(n)\}$

Fig. 18

Flowchart:

Connector: **2**

↓

**S422** — ARE MENTAL VALUES TO BE USED? — NO →

↓ YES

ACQUIRE MENTAL VALUE M FOR PLAYER FROM CHARACTER TABLE — **S424**

↓

CORRECT PARAMETER VARIATION VALUES — **S426**

$$A2 \leftarrow \frac{M}{5}$$
$$\triangle TI \leftarrow \triangle TI \times A2(\triangle TI > 0)$$
$$\triangle TI \leftarrow \triangle TI \div A2(\triangle TI < 0)$$
$$\triangle TO \leftarrow \triangle TO \times A2(\triangle TO > 0)$$
$$\triangle TO \leftarrow \triangle TO \div A2(\triangle TO < 0)$$

↓

COMPUTE INTERNAL AND EXTERNAL PARAMETERS — **S428**
$$\triangle TI \leftarrow TI + \triangle TI$$
$$\triangle TO \leftarrow TO + \triangle TO$$

↓

COMPUTE GENERAL PARAMETER — **S430**
$$T \leftarrow \frac{TI + TO}{2}$$

↓

**S432** — IS THERE ANOTHER PLAYER? — YES → Connector: **1**

↓ NO

RETURN

PLAYER AAA

| | SCORE | RANK-ING | CARRY | DISTANCE BE-TWEEN LIE AND TARGET | LIE | .... | LOOK IN PLAYER'S FACE | .... |
|---|---|---|---|---|---|---|---|---|
| INTERNAL PARAMETER VARIATION VALUE → | +2 | +3 | +3 | +0 | +3 | | +1 | |
| TENSION RATE → | 0.5 | 0.5 | 0.8 | 0.2 | 0.4 | | 0.1 | |

(MULTIPLICATION) PRODUCT → +1.0 +1.5 +2.4 +0.0 +1.2 +0.1

SUM +6.2

| | | | | | | | | |
|---|---|---|---|---|---|---|---|---|
| EXTERNAL PARAMETER VARIATION VALUE → | +1.0 | +1.5 | −1.5 | +3.0 | +1.0 | | +1.0 | |
| TENSION RATE → | 0.5 | 0.5 | 0.2 | 0.8 | 0.6 | | 0.9 | |

(MULTIPLICATION) PRODUCT → +0.5 +0.8 −0.3 +2.4 +0.6 +0.9

SUM +4.9

Fig. 19

EP 1 260 252 A2

PLAYER AAA

INTERNAL PARAMETER VARIATION → +6.2
VALUE (NOT CORRECTED YET)
× 

CORRECTION FACTOR A2 → 0.6

CORRECTED INTERNAL PARAMETER → +3.7
VARIATION VALUE

INTERNAL PARAMETER → 70
(NOT CORRECTED YET)

CORRECTED INTERNAL PARAMETER → 74

+4.9 ← EXTERNAL PARAMETER VARIATION
VALUE (NOT CORRECTED YET)
×

0.6 ← CORRECTION FACTOR A2

+2.9 ← CORRECTED EXTERNAL PARAMETER
VARIATION VALUE

70 ← EXTERNAL PARAMETER
(NOT CORRECTED YET)

73 ← CORRECTED EXTERNAL
PARAMETER

GENERAL PARAMETER → 74

EP 1 260 252 A2

Fig. 20

36

Fig. 21

OUTPUT GAME
STATUSES

PREPARE GAME STATUSES BASED
ON STATUS DATA

- DISPLAY DATA ON BALLS
- AUDIO OUTPUT DATA ON CARRY
- DISPLAY DATA ON SCORES AND
  RANKING
- DISPLAY DATA ON PLAYERS
- DISPLAY DATA ON GEOGRAPHICAL
  FEATURES        .
                  .
                  .

S502

CONVERT GENERAL PARAMETERS INTO INTEGERS
BETWEEN 1 AND 15

S504

GENERATE COLOR DISPLAY
DATA

S506

CONVERT GENERAL PARAMETERS INTO INTEGERS
BETWEEN 1 AND 5

S508

GENERATE FACE DISPLAY DATA

S510

OUTPUT STATUSES AND
DATA TO TV

S512

RETURN

Fig. 22

COLOR CONVERSION TABLE Ta4

| PARAMETER T1 | COLOR |
|---|---|
| 15 | LIGHT GREEN |
| 14 | SLIGHTLY LIGHT GREEN |
| 13 | STANDARD GREEN |
| 12 | SLIGHTLY DEEP GREEN |
| 11 | DEEP GREEN |
| 10 | LIGHT YELLOW |
| ⋮ | ⋮ |
| 6 | DEEP YELLOW |
| ⋮ | ⋮ |
| 1 | DARK BLUE |

Fig. 23

Fig. 24

DIFFERENTIAL STATUS DATA D5

| COMPARATIVE PLAYER | SCORE | RANK-ING | CARRY | DISTANCE BE-TWEEN LIE AND TARGET | LIE | . . . . | LOOK IN PLAYER'S FACE | . . . . |
|---|---|---|---|---|---|---|---|---|
| BBB | −5 | −2 | 40 | −22 | 4 | | 3 | |
| CCC | −3 | −1 | −30 | −14 | 1 | | 2 | |

EP 1 260 252 A2

Fig. 25

CHARACTER DATA D6 FOR EXTERNAL PARAMETERS

D61 →

| CHARACTER ID NUMBER | SCORE | RANKING | CARRY | . . . . | LOOK IN PLAYER'S FACE | . . . . |
|---|---|---|---|---|---|---|
| 1<br><br>(FRIVOLOUS OR THOUGHTLESS) | $-10$ OR LESS → $-3$<br>$-9$ THROUGH $-2$ → $-2$<br>$-1$ THROUGH $+1$ → $0$<br>$+2$ THROUGH $+9$ → $+2$<br>$+10$ OR MORE → $+3$ | $-2$ OR LESS → $+3$<br>$-1$ → $+2$<br>$0$ → $0$<br>$+1$ → $-2$<br>$+2$ OR MORE → $-3$ | $30$ OR MORE → $-3$<br><br>$-29$ THROUGH $+29$ → $0$<br><br>$-30$ OR LESS → $+3$ | | $+3$ OR MORE → $-3$<br>$+1$ THROUGH $+2$ → $-2$<br>$0$ → $0$<br>$-2$ THROUGH $-1$ → $+2$<br>$-3$ OR LESS → $+3$ | |
| 2<br><br>(CALM OR COOL) | $-10$ OR LESS → $0$<br>$-9$ THROUGH $-2$ → $0$<br>$-1$ THROUGH $+1$ → $0$<br>$+2$ THROUGH $+9$ → $0$<br>$+10$ OR MORE → $0$ | $-2$ OR LESS → $-1$<br>$-1$ → $0$<br>$0$ → $0$<br>$+1$ → $0$<br>$+2$ OR MORE → $+1$ | $30$ OR MORE → $0$<br><br>$-29$ THROUGH $+29$ → $0$<br><br>$-30$ OR LESS → $0$ | | $+3$ OR MORE → $0$<br>$+1$ THROUGH $+2$ → $0$<br>$0$ → $0$<br>$-2$ THROUGH $-1$ → $0$<br>$-3$ OR LESS → $0$ | |
| ⋮ | ⋮ | ⋮ | ⋮ | | ⋮ | |

Fig. 26

COMPUTE TENSION
PARAMETERS

GENERATE DIFFERENTIAL
STATUS DATA — S442

ACQUIRE CHARACTER DATA FOR
EXTERNAL PARAMETER ASSOCIATED
WITH CHARACTER ID NUMBER — S444

COMPUTE EXTERNAL PARAMETER
VARIATION VALUE $\triangle TO(n)$ BY REFERENCE
TO DIFFERENTIAL STATUS DATA — S446

COMPUTE EXTERNAL PARAMETER
VARIATION VALUE $\triangle TO$
$\triangle TO \leftarrow \Sigma \{(1-R) \cdot \triangle TO(n)\}$ — S448

Fig. 27

AAA : −3

55b

55c(55c1)

BBB : +2

55b

55c

CCC : 0

55b

55c

Fig. 28

OUTPUT GAME STATUSES

CONVERT GENERAL PARAMETER INTO
INTEGER BETWEEN 1 AND 5 — S522

GENERATE DISPLAY DATA IN ELECTRO-
CARDIOGRAPHIC WAVES

| PARAMETER AFTER CONVERSION | WAVE TRAIN FREQUENCY | WAVE AMPLITUDE |
|---|---|---|
| 1 | 3 | 5 |
| 2 | 3 | 4 |
| 3 | 2 | 3 |
| 4 | 1 | 2 |
| 5 | 1 | 1 |

— S524

RETURN